# EUROPÄISCHE PATENTANMELDUNG

(11) **EP 4 506 190 A1**
(43) Veröffentlichungstag der Anmeldung: **12.02.2025**
(21) Anmeldenummer: 23190980.5
(22) Anmeldetag: 11.08.2023
(51) Int. Cl.: B60C 23/04, B60C 23/00

(54) **REIFENDRUCKÜBERWACHUNG**

(71) Anmelder: Schmitz Cargobull AG, 48341 Altenberge (DE)
(72) Erfinder: Vens, Rainer, 48653 Coesfeld (DE)
(74) Vertreter: Cohausz & Florack

(57) **Zusammenfassung**

Es werden Verfahren und Vorrichtungen zur Reifendrucküberwachung vorgeschlagen.

## Beschreibung

### Gebiet

Die Erfindung betrifft Verfahren und Vorrichtungen zur Reifendrucküberwachung, insbesondere eines Reifens eines Fahrzeuges, insbesondere eines Nutzfahrzeuges, insbesondere eines Straßennutzfahrzeuges.

### Hintergrund

Heutzutage werden im privaten und gewerblichen Straßenverkehr fast ausschließlich bereifte Fahrzeuge betrieben, deren Räder mit gasgefüllten Reifen ausgestattet sind. Für die Funktionsfähigkeit dieser Räder ist ein ausreichender, jedoch nicht zu hoher Reifendruck notwendig. Ein zu niedriger Reifendruck kann beispielsweise den Rollwiderstand des Reifens und damit Verschleiß und Fahrkosten erhöhen. Ein zu hoher Reifendruck hingegen kann zu Beschädigungen des Reifens und damit zu Fahrtausfällen führen.

Eine manuelle Überwachung des Reifendrucks durch die Nutzer des jeweiligen Fahrzeugs ist aufwändig und wird allzu häufig nicht in der erforderlichen Regelmäßigkeit vollzogen. Die Folge ist ein erhöhtes Risiko eines falschen (insbesondere zu niedrigen aber auch möglicherweise zu hohen) Reifendrucks.

### Zusammenfassung einiger beispielhafter Ausführungsformen der Erfindung

Die Erfindung befasst sich unter anderem damit, eine Reifendrucküberwachung mit einer entsprechenden Sensorik bereitzustellen. An oder in einem Rad umfassend einen Reifen und eine Felge (z.B. und ein Ventil)wird hierbei ein jeweiliger Drucksensor verbaut, der den Druck des Gases im Reifen erfasst. Vorteilhaferweise kann eine teilweise automatisierte, sensorbasierte Reifendrucküberwachung den Nutzer seiner Pflicht entheben, den Reifendruck manuell zu erfassen. Damit wird das Risiko menschlichen Versagens in Form lückenhafter Reifendruckkontrollen reduziert. Die Fahrt wird sicherer und günstiger.

Doch auch bei einer sensorbasierten Reifendrucküberwachung können menschliche Fehler die Überwachungsgüte beeinträchtigen. So ist es beispielsweise nicht selten erforderlich, bei der Installation von Reifendrucksensoren und/oder bei jedem Rad- und/oder Reifenwechsel eine Verknüpfung zwischen einer (z.B. neuen) Radposition und dem jeweiligen Reifendrucksensor in einem zugehörigen Überwachungssystem einzupflegen. Fehlerhafte Zuordnungen können die korrekte Funktionsweise der Reifendrucküberwachung verhindern und führen zu weiteren Risiken, insbesondere wenn sich der Nutzer des Fahrzeugs auf die korrekte Funktionsweise einer automatisierten Reifendrucküberwachung verlässt. Darüber hinaus ist eine manuelle Zuordnung zwischen Radposition und Reifendrucksensor aufwendig und erhöht die Instandhaltungskosten des Fahrzeugs.

Eine Aufgabe der vorliegenden Erfindung ist es daher, Verfahren und Vorrichtungen zur Reifendrucküberwachung bereitzustellen, welche eine automatisierte Zuordnung zwischen Reifendrucksensoren und Radpositionen erleichtern und/oder ermöglichen. Insbesondere soll diese Aufgabe mit der am Fahrzeug bereits existierenden Reifendrucksensorik gelöst werden.

Gemäß einem ersten Aspekt der Erfindung wird ein Verfahren zur Reifendrucküberwachung eines Fahrzeugs, insbesondere Nutzfahrzeugs, ausgeführt durch eine Reifendrucksensoranordnung, vorgeschlagen, umfassend
- Erfassen eines Innendrucks eines Reifens eines Rads,
- Erfassen zumindest einer Beschleunigung zumindest umfassend eine Querbeschleunigung, wobei die Querbeschleunigung im Wesentlichen parallel zu einer Rotationsachse des Rads wirkt,
- Senden eines Kommunikationssignals umfassend eine Reifendruckindikation und eine Querbeschleunigungsindikation, wobei die Reifendruckindikation zumindest den erfassten Innendruck des Reifens repräsentiert, und wobei die Querbeschleunigungsindikation zumindest die Querbeschleunigung repräsentiert.

Ein Fahrzeug kann vorliegend insbesondere ein bereiftes Fahrzeug sein. Beispielsweise kann das Fahrzeug zumindest 1, 2, 3, 4, 6, 8, 10, 12 oder mehr Räder mit jeweiligem Reifen aufweisen. Das offenbarte Fahrzeug kann beispielsweise ein Fahrzeug für den privaten Straßenverkehr, insbesondere ein motorisiertes Zwei- oder Dreirad (Motorrad, Moped, Roller) oder ein Personenkraftwagen (PKW) sein.

Das offenbarte Fahrzeug kann insbesondere ein Nutzfahrzeug sein, zum Beispiel ein Lastkraftwagen, ein Anhänger oder ein Sattelauflieger. Nutzfahrzeuge sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Nutzfahrzeugaufbauten auf, welche der Aufnahme der zu transportierenden Güter in einem Innenraum, insbesondere einem Laderaum, dienen. So sind beispielsweise Kofferaufbauten mit festen Seitenwänden und einem festen Dach bekannt, welche den Innenraum umschließen. Alternativ oder zusätzlich kann der Anhänger auch eine Außenwand aufweisen, welche zumindest teilweise eine Plane umfasst (Planenaufbauten).

Das offenbarte Verfahren umfasst das Erfassen eines Innendrucks eines Reifens eines Rads. Das Rad ist hierbei insbesondere ein Rad des Fahrzeugs. Das Rad kann an einer Radachse des Fahrzeugs angeordnet sein, welche beispielsweise mit einer Rotationsachse des Rades zusammenfallen kann. Das Rad umfasst insbesondere eine Felge und einen Reifen. Der Reifen kann auf die Felge aufgespannt sein. Ein Innenraum des Rads, welcher insbesondere von dem Reifen und der Felge begrenzt sein kann, ist mit einem Gas gefüllt, insbesondere Luft. Der Innenraum des Reifens ist beispielsweise durch ein Ventil des Rads mit dem Gas befüllbar und/oder entleerbar. In dem Innenraum des Reifens besteht ein Innendruck. Der Innendruck kann beispielsweise für PKW im Bereich 2-3 bar liegen. Bei Nutzfahrzeugen können höhere Innendrücke im Bereich 8-10 bar vorliegen.

Ein Rad ist also insbesondere ein am Fahrzeug montiertes Rad. Das Rad kann eine (insbesondere feste und/oder unveränderliche) Radposition am Fahrzeug haben. Eine Radposition kann beispielsweise durch die Fahrzeugseite (beispielsweise in Vorwärtsfahrtrichtung links oder rechts) bestimmt sein. Eine Radposition kann alternativ oder zusätzlich entlang der Vorwärtsfahrtrichtung (beispielsweise in Vorwärtsfahrtrichtung hinten oder vorne, an Position 1 von N, wobei 1 der in Vorwärtsfahrtrichtung vordersten Position und N der in Vorwärtsfahrtrichtung hinteren Position entspricht) definiert sein. Eine Radposition kann alternativ oder zusätzlich in seiner Position entlang einer Radachse und/oder Rotationsachse des Rads und/oder senkrecht zur Vorwärtsfahrtrichtung definiert sein, insbesondere im Falle von mehreren Rädern, welche direkt nebeneinander auf der Radachse angeordnet sind (bspw. im Falle von Zwillingsrädern). Eine beispielhafte Radposition könnte beispielsweise durch die obigen drei Positionsangaben als (links, Position 1, zweites Rad von außen) definiert sein.

Der Innendruck eines Reifens eines Rads des Fahrzeugs kann insbesondere mittels eines Drucksensors einer Reifendrucksensoranordnung erfasst werden. Die Reifendrucksensoranordnung kann insbesondere im Bereich eines Rads des Fahrzeugs angeordnet sein, beispielsweise im oder am Reifen eines Rads und/oder an einer Felge des Rads und/oder einem Ventil des Rads. Die Reifendrucksensoranordnung kann zumindest einen Drucksensor und Mittel zur Ausführung des Verfahrens nach dem ersten Aspekt umfassen.

Der Innendruck kann kontinuierlich und/oder periodisch, insbesondere in vordefinierten Intervallen, erfasst werden. Beispielsweise kann der Innendruck in zeitlichen Abständen von zumindest 10s, 30s, 1min, 2min, 5min, 10min, 15min, 20min, 30min, 40min, 50min, 1h, 2h, 3h, 4h, 5h, 10h, 12h, 1d oder länger bestimmt werden. Beispielsweise kann der zeitliche Abstand auch höchstens 10s, 30s, 1min, 2min, 5min, 10min, 15min, 20min, 30min, 40min, 50min, 1h, 2h, 3h, 4h, 5h, 10h, 12h, 1d oder weniger betragen.

Das Verfahren umfasst ferner das Erfassen zumindest einer Beschleunigung.

Die zumindest eine erfasste Beschleunigung umfasst zumindest eine erfasste Querbeschleunigung. Eine Querbeschleunigung wirkt zumindest im Wesentlichen entlang einer Rotationsachse des Rads.

Die Beschleunigung ist insbesondere eine Beschleunigung der Reifendrucksensoranordnung. Alternativ oder zusätzlich ist die Beschleunigung eine Beschleunigung des Rads. Die Beschleunigung kann insbesondere von einem Beschleunigungssensor der Reifendrucksensoranordnung erfasst werden.

Die Beschleunigung wird insbesondere entlang einer Erfassungsachse erfasst. Die Erfassungsachse ist insbesondere relativ zu der Reifendrucksensoranordnung und/oder zu dem Rad fixiert. Eine Erfassungsachse, in der eine Beschleunigung erfasst wird, ist im Wesentlichen parallel zur Rotationsachse des Rads ausgerichtet. In dieser Erfassungsachse wird die Querbeschleunigung erfasst. Die Beschleunigung kann zusätzlich in weiteren Erfassungsachsen erfasst werden. Zumindest eine oder der weiteren Erfassungsachsen kann beispielsweise im Wesentlichen senkrecht zur Rotationsachse und/oder zur Radachse des Rads ausgerichtet sein. Die weiteren Erfassungsachsen können zusätzlich zueinander im Wesentlichen senkrecht ausgerichtet sein.

Beispielsweise wenn das Fahrzeug eine Kurve fährt, wirken seitliche Trägheitskräfte (Zentrifugalkraft) auf das Fahrzeug bzw. das Fahrzeug muss diesen eine Zentripetalkraft entgegensetzen, um nicht von einer vorgesehenen Fahrlinie abzukommen. Die Querbeschleunigung erfasst diese seitlichen Trägheitskräfte. Die Querbeschleunigung kann von einer Fahrgeschwindigkeit und/oder einem Kurvenradius des Fahrzeugs abhängen. Höhere Fahrgeschwindigkeiten und kleinere Kurvenradius führen jeweils zu höheren Querbeschleunigungen.

Die Beschleunigung kann kontinuierlich und/oder in vordefinierten zeitlichen Abständen erfasst werden. Beispielsweise kann die Beschleunigung in zeitlichen Abständen von zumindest 100µs, 200µs, 500µs, 1ms, 2ms, 5ms, 10ms, 50ms, 100ms, 200ms, 500ms, 1s, 2s, 5s, 10s, 30s, 1min, 2min, 5min, 10min, 20min, 30min oder 1h erfasst werden. Beispielsweise kann die Beschleunigung in zeitlichen Abständen von höchstens 100µs, 200µs, 500µs, 1ms, 2ms, 5ms, 10ms, 50ms, 100ms, 200ms, 500ms, 1s, 2s, 5s, 10s, 30s, 1min, 2min, 5min, 10min, 20min, 30min oder 1h erfasst werden.

Die zumindest eine erfasste Beschleunigung kann einen momentanen Wert der Beschleunigung entlang zumindest einer Erfassungsachse umfassen. Möglich ist ebenfalls eine Zusammenfassung mehrerer erfasster Beschleunigungswerte, beispielsweise in Form eines Mittelwerts, Medians, maximalen Werts, minimalen Werts und/oder Kombinationen hieraus. Beispielsweise kann die Beschleunigung zumindest 2, 3, 4, 5 oder mehr voneinander unabhängig erfasste Beschleunigungswerte zusammenfassen.

Mittels der zumindest einen erfassten und/oder zumindest zweier der zumindest einen Beschleunigung kann unter anderem die (z.B. momentane) Drehrichtung des Rads und/oder der Reifendrucksensoranordnung, die (z.B. momentane) Drehgeschwindigkeit des Rads und/oder der Reifendrucksensoranordnung sowie die (z.B. momentane) Drehwinkelposition des Rads und/oder der Reifendrucksensoranordnung erfasst werden.

Typischerweise umfasst eine Beschleunigung, welche im Wesentlichen senkrecht zur Rotationsachse des Rades erfasst wird, eine Überlagerung der (insbesondere konstanten) Erdbeschleunigung und einer Zentrifugalbeschleunigung durch die Radrotation, insbesondere wenn die Erfassungsachse, in welcher der Beschleunigungssensor eine Beschleunigung erfasst, im Wesentlichen senkrecht zur Rotationsachse des Rads ausgerichtet ist. Eine Beschleunigung kann ebenfalls Hinweise auf mechanische Interaktionen des Rads und/oder des Reifens mit seiner Umgebung umfassen. Beispielsweise kann, insbesondere bei geeigneter Anordnung der Reifendrucksensoranordnung, welche den Beschleunigungssensor umfasst (beispielsweise am Reifen selbst) ein Bodenkontakt eines Bereichs des Rads und/oder Reifens, in welchem die Reifendrucksensoranordnung angeordnet ist, basierend auf der erfassten Beschleunigung detektiert werden.

Eine Drehgeschwindigkeit des Rads und/oder der Reifendrucksensoranordnung kann beispielsweise aus einer von dem Beschleunigungssensor erfassten radialen Beschleunigung, im Wesentlichen senkrecht zur Rotationsachse, abgeleitet werden. Die radiale Beschleunigung kann insbesondere eine auf die Reifendrucksensoranordnung einwirkende Zentrifugalkraft widerspiegeln, welche mit der Drehgeschwindigkeit des Rads korreliert.

Das offenbarte Verfahren umfasst ferner das Senden eines Kommunikationssignals.

Das Kommunikationssignal ist insbesondere ein drahtloses Kommunikationssignal, beispielsweise nach einem drahtlosen Kommunikationsstandard wie ein Bluetooth (https://www.bluetooth.com), Zigbee, einem anderen Kommunikationsstandard, einer nicht standardisierten, beispielsweise proprietären Funkmethode, und/oder Kombinationen hieraus. Das Kommunikationssignal kann auf eine Trägerfrequenz aufmoduliert sein, beispielsweise einer Trägerfrequenz von einigen hundert MHz, beispielsweise 200 - 800 MHz, beispielsweise 433 MHz oder auch höhere Frequenzen von 2,4 bis 2,4835 GHz (z.B. Bluetooth).

Das Kommunikationssignal kann eine Gesamtsendung als ein einziges, zusammenhängendes Signal sein, welches in einem, also ohne eine Sendepause, übertragen wird. Auch kann das Kommunikationssignal in mehrere Teilsendungen unterteilt sein. Die Teilsendungen können in einem zeitlichen Abstand zueinander gesendet werden. Das Kommunikationssignal kann beispielsweise ein oder mehrere Datenpakete umfassen. beispielsweise mehrere voneinander separate Datenpakete, welche jeweils unabhängig von den übrigen Datenpaketen empfangen werden können. Eine Gesamtsendung kann mehrere Datenpakete umfassen. Auch können Teilsendungen jeweils zumindest ein Datenpaket umfassen. Eine Gesamtheit von Datenpaketen kann auf mehrere Teilsendungen aufgeteilt werden, sodass zumindest zwei Datenpakete in voneinander verschiedenen Teilsendungen übertragen werden.

Das Kommunikationssignal kann als Broadcast-Signal gesendet werden, beispielsweise ohne spezifischen Empfänger und ohne Notwendigkeit einer Rückmeldung seitens des Empfängers.

Für das Kommunikationssignal kann eine Sendedauer bestimmt sein, welche der Zeitspanne entspricht, welche zwischen dem Beginn und dem Ende des Sendens verstreicht. Auch kann für das Kommunikationssignal ein Sendezeitpunkt bestimmt sein, beispielsweise kann dieser den Beginn des Sendens des Kommunikationssignals, die Vollendung des Sendens oder auch einen Zeitpunkt während der Sendedauer (beispielsweise die zeitliche Mitte der Sendedauer) bezeichnen.

Das Kommunikationssignal umfasst eine Reifendruckindikation. Die Reifendruckindikation repräsentiert zumindest den erfassten Innendruck des Reifens.

Wenn hier und im Folgenden eine Indikation (hier die Reifendruckindikation) eine Information repräsentiert (hier den erfassten Innendruck des Reifens), ist damit insbesondere gemeint, dass die Information aus der Indikation ableitbar ist. Die Indikation kann beispielsweise ein Informationselement sein, beispielsweise eine Abfolge von Bits, welche mit einer geeigneten Auswertungsmethode in die Information umgewandelt werden kann. Die Umwandlung der Indikation in die Information kann weitere Angaben benötigen. Beispielsweise kann eine Reifendruckindikation einem Index zu einer Tabelle mit Innendruckwerten eines Reifens entsprechen. Es ist aber auch möglich, dass aus der Indikation allein, ohne Zuhilfenahme weiterer Angaben, die Information abgeleitet werden kann. Beispielsweise kann die Reifendruckindikation einem Fließkommawert entsprechen, welcher in dem Kommunikationssignal enthalten ist und der den Reifeninnendruck angibt.

Die Reifendruckindikation kann beispielsweise den (insbesondere zum Zeitpunkt der aktuellen Messung) erfassten Innendruck des Reifens repräsentieren. Auch möglich ist es, dass die Reifendruckindikation einen aus dem erfassten Innendruck abgeleiteten Wert repräsentiert. Beispielsweise kann die Reifendruckindikation einen Mittelwert, Median, Maximalwert, Minimalwert über eine Mehrzahl von erfassten Innendrücken und/oder Kombinationen hieraus repräsentieren. Die Mehrzahl von erfassten Innendrücken kann beispielsweise 2, 3, 4, 5, 10, 20 oder mehr erfasste Innendrücke umfassen. Die Mehrzahl von erfassten Innendrücken kann beispielsweise die zuletzt erfassten Innendrücke, beispielsweise welche nach dem letzten Senden erfasst wurden, umfassen.

Das Kommunikationssignal umfasst ferner eine Querbeschleunigungsindikation. Die Querbeschleunigungsindikation repräsentiert zumindest die Querbeschleunigung.

Durch das Senden der Querbeschleunigungsindikation wird ein Empfänger in die Lage versetzt, das empfangene Kommunikationssignal mit einer auf das Rad und/oder die Reifendrucksensoranordnung wirkende Querbeschleunigung in Beziehung zu setzen. Es wurde erkannt, dass bei geeigneter Verarbeitung der Querbeschleunigungsindikation eine automatische Zuordnung zwischen einem Reifendrucksensor und einer Radposition, an welcher der Reifendrucksensor angeordnet ist, vorgenommen werden kann.

Die Querbeschleunigungsindikation kann beispielsweise eine auf das Rad und/oder die Reifendrucksensoranordnung wirkende Querbeschleunigung repräsentieren.

Es wurde erkannt, dass Räder an verschiedenen Radpositionen (und an ihnen angeordnete Reifendrucksensoranordnungen) unterschiedliche Querbeschleunigungen erfahren. Deshalb lässt sich die Radposition einer Reifendrucksensoranordnung ausgehend von der erfassten Querbeschleunigung automatisch zuordnen.

Die Querbeschleunigungsindikation kann beispielsweise erlauben, eine Querbeschleunigung abzuleiten. Die Querbeschleunigungsindikation kann hierfür ein Informationselement umfassen, aus welchem die Querbeschleunigung abgeleitet werden kann, beispielsweise unter Zuhilfenahme weiterer Angaben (z.B. einer Tabelle und/oder eines physikalischen Modells des Rads/Reifens und/oder eines für diese Ableitung trainierten Modells des maschinellen Lernens). Die Querbeschleunigungsindikation kann beispielsweise einen Momentanwert der Querbeschleunigung umfassen. Beispielsweise kann der Momentanwert die Querbeschleunigung zum Zeitpunkt des Sendens (und/oder vordefinierte Zeitspanne vor dem Senden, beispielsweise vor weniger als 1min, 30s, 15s, 5s, 1s, 500ms, 100ms oder weniger vor dem Senden) angeben.

Die Querbeschleunigungsindikation kann alternativ oder zusätzlich einen aus der erfassten Querbeschleunigung abgeleiteten Wert repräsentieren. Beispielsweise kann die Querbeschleunigungsindikation einen Mittelwert, Median, Maximalwert, Minimalwert über eine Mehrzahl von erfassten Querbeschleunigungen und/oder Kombinationen hieraus repräsentieren. Beispielsweise kann hierfür ein jeweiliger erfasster Querbeschleunigungswert mit seinem Vorzeichen oder auch (z.B. nur) mit seinem Betrag berücksichtigt werden. Beispielsweise kann ein abgeleiteter Wert eine Summe, Median, Maximalwert und/oder Minimalwert über die (z.B. Beträge der) Beschleunigung angeben. Die Mehrzahl von erfassten Querbeschleunigungswerten zur Berechnung des abgeleiteten Werts kann beispielsweise 2, 3, 4, 5, 10, 20 oder mehr betragen. Die Mehrzahl von erfassten Querbeschleunigungswerten kann beispielsweise die zuletzt erfassten Querbeschleunigungen, beispielsweise welche seit dem letzten Senden erfasst wurden, umfassen.

Eine Querbeschleunigungsindikation kann für eine vordefinierte Zeitspanne definiert sein. Beispielsweise kann die von der Querbeschleunigungsindikation repräsentierte Querbeschleunigung über die vordefinierte Zeitspanne erfasst sein. Beispielsweise können während der vordefinierten Zeitspanne mehrere einzelne Messungen der Querbeschleunigung vorgenommen werden.

Die Querbeschleunigungsindikation kann beispielsweise im Kommunikationssignal als eine Fließkommazahl und/oder als ein Integer enthalten sein.

Die Querbeschleunigungsindikation kann beispielsweise eine Querbeschleunigung (z.B. des Rads und/oder der Reifendrucksensoranordnung) zum Zeitpunkt des Sendens des Kommunikationssignals repräsentieren. Beispielsweise kann eine Querbeschleunigung von der Querbeschleunigungsindikation repräsentiert werden, welche vor dem Senden des Kommunikationssignals erfasst wurde. Beispielsweise kann die Querbeschleunigungsindikation eine Querbeschleunigung repräsentieren, welche zumindest in einem Teil einer Zeitspanne ab dem Senden eines (z.B. unmittelbar) vorangehenden Kommunikationssignals bis zum Senden eines auf das vorangehende (z.B. unmittelbar) folgende Kommunikationssignals erfasst wurde.

Das Senden des Kommunikationssignals kann beispielsweise mit dem Erfassen eines Innendrucks koordiniert sein. Beispielsweise kann für eine gegebene Erfassung eines Innendrucks ein zugeordnetes Senden des Kommunikationssignals vorgesehen werden. Beispielsweise kann in diesem Fall das Senden des Kommunikationssignals nach einem jeweiligen Erfassen des Innendrucks erfolgen. Damit kann das Kommunikationssignal in den im Wesentlichen gleichen Intervallen gesendet werden, in denen der Innendruck erfasst wird. Das Senden des Kommunikationssignals kann zusätzlich oder alternativ unabhängig von dem Erfassen des Innendrucks sein. Beispielsweise kann das Senden des Kommunikationssignals erst nach einem Erfassen einer Mehrzahl von Innendrücken erfolgen. Das Erfassen kann also häufiger durchgeführt werden als das Senden. Beispielsweise kann nach dem Erfassen einer Mehrzahl von Innendrücken ein abgeleiteter Wert (siehe oben, Mittelwert oder andere) berechnet werden und danach einmalig gesendet werden. Auch kann das Senden mehrfach erfolgen, nach einem einzigen Erfassen des Innendrucks. Das Senden kann also häufiger durchgeführt werden als das Erfassen des Innendrucks.

Beispielsweise können für einen gegebenen (z.B. einzigen) erfassten Innendruck mehrere Kommunikationssignale versendet werden, die sich beispielsweise zumindest unter anderem durch eine von ihnen umfasste Querbeschleunigungsindikation voneinander unterscheiden, allerdings jeweils den identischen Innendruck angeben.

Gemäß einem Ausführungsbeispiel des ersten Aspekts werden mehrere Beschleunigungen in zumindest zwei oder drei verschiedenen Erfassungsachsen erfasst.

Die zumindest zwei oder drei verschiedenen Erfassungsachsen können beispielsweise, zumindest im Wesentlichen, senkrecht zueinander ausgerichtet sein. Beispielsweise kann eine der zumindest zwei und/oder zwei der zumindest zwei oder drei Erfassungsachsen im Wesentlichen senkrecht zur Rotationsachse des Rads ausgerichtet sein. Eine der zumindest zwei oder drei Erfassungsachsen, entlang derer die Beschleunigung(-en) erfasst werden, ist im Wesentlichen parallel zur Rotationsachse des Rads ausgerichtet (Querbeschleunigung). Eine im Wesentlichen senkrecht zur Rotationsachse erfasste Beschleunigung kann insbesondere als radiale Beschleunigung bezeichnet werden. Vorliegend können zwei voneinander verschiedene radiale Beschleunigungen in voneinander verschiedenen Erfassungsachsen (beispielsweise im Wesentlichen senkrecht zueinander) erfasst werden, sowie eine Querbeschleunigung. Die Reifendrucksensoranordnung kann in geeigneter Weise an dem Rad angeordnet sein, sodass zumindest ein Teil der Ausrichtung der Erfassungsachsen, in denen die Beschleunigung erfasst wird, in Relation zur Rotationsachse erreicht wird.

Wenn zwei Achsen (beispielsweise Erfassungsachse zu Rotationsachse oder zu Radachse) zueinander im Wesentlichen senkrecht ausgerichtet sind, kann hiermit insbesondere gemeint sein, dass zwischen ihnen ein Winkel eingeschlossen ist, welcher von 90° um höchstens 1°, 2°, 5°, 10° oder 15° abweicht.

Wenn zwei Achsen zueinander im Wesentlichen parallel ausgerichtet sind, kann hiermit insbesondere gemeint sein, dass zwischen ihnen ein Winkel eingeschlossen ist, welcher von 0° um höchstens 1°, 2°, 5°, 10° oder 15° abweicht.

Gemäß einem Ausführungsbeispiel des ersten Aspekts umfasst das Verfahren ferner
- Detektieren einer Kurvenfahrt des Fahrzeugs, insbesondere eines Beginns einer Kurvenfahrt und/oder eines Endes einer Kurvenfahrt und/oder einer Richtung der Kurvenfahrt.

Eine Kurvenfahrt eines Fahrzeugs liegt insbesondere dann vor, wenn das Fahrzeug nicht geradeaus fährt, sondern nach links oder nach rechts fährt. Üblicherweise bewegt sich das Fahrzeug während einer Kurvenfahrt im Wesentlichen entlang eines Kreisbogens mit einem Kurvenradius.

Ein Beginn einer Kurvenfahrt liegt beispielsweise dann vor, wenn das Fahrzeug von einer Geradeausfahrt abweicht. Beispielsweise kann die Geradeausfahrt vor Beginn der Kurvenfahrt über eine Mindestdauer angehalten haben, beispielsweise zumindest 1s, 5s, 10s, 30s, 1min, 2min, 5min, 10min oder mehr. Eine Abweichung von der Geradeausfahrt kann beispielsweise durch das Unterschreiten eines Kurvenradius definiert sein. Beispielsweise kann eine Kurvenfahrt dann beginnen und/oder vorliegen, wenn der Kurvenradius weniger als ein vordefinierter unterer Kurvenradiusschwellwert beträgt. Der untere Kurvenradiusschwellwert kann beispielsweise höchstens 500m, 400m, 300m, 200m, 100m, 90m, 80m, 70m, 60m, 50m, 40m, 30m, 20m, 10M oder 5m betragen.

Ein Ende einer Kurvenfahrt liegt beispielsweise dann vor, wenn das Fahrzeug von einer Kurvenfahrt abweicht, insbesondere von einer Kurvenfahrt in eine Geradeausfahrt übergeht. Beispielsweise kann die Kurvenfahrt vor Beginn der Geradeausfahrt über eine Mindestdauer angehalten haben, beispielsweise zumindest 1s, 5s, 10s, 30s, 1min, 2min, 5min, 10min oder mehr. Eine Abweichung von der Kurvenfahrt kann beispielsweise durch das Überschreiten eines Kurvenradius definiert sein. Beispielsweise kann eine Kurvenfahrt dann enden und/oder eine Geradeausfahrt vorliegen, wenn der Kurvenradius mehr als ein vordefinierter oberer Kurvenradiusschwellwert beträgt. Der obere Kurvenradiusschwellwert kann beispielsweise zumindest 500m, 400m, 300m, 200m, 100m, 90m, 80m, 70m, 60m, 50m, 40m, 30m, 20m, 10M oder 5m betragen. Der obere Kurvenradiusschwellwert kann größer sein als der untere Kurvenradiusschwellwert. Hierdurch wird eine Hysterese der Kurvenfahrtdetektion erreicht.

Alternativ oder zusätzlich kann eine Richtung der Kurvenfahrt bestimmt werden. Die Richtung kann insbesondere entweder einer Kurvenfahrt nach links oder nach rechts (z.B. in Fahrtrichtung) entsprechen.

Ferner kann eine Dauer der Kurvenfahrt bestimmt werden, beispielsweise als eine zeitliche Differenz zwischen dem Beginn der Kurvenfahrt und dem Ende der Kurvenfahrt.

Ein Beginn, ein Ende und/oder eine Richtung einer Kurvenfahrt kann auch durch ein (z.B. empfangenes, z.B. drahtlos empfangenes) Trigger-Signal angezeigt werden. Das Trigger-Signal kann beispielsweise von der Reifendrucksensoranordnung empfangen werden, beispielsweise von einer Vorrichtung, beispielsweise von einer Telematikeinheit (CTU). Hierfür kann die Reifendrucksensoranordnung zu einer bidirektionalen Kommunikation eingerichtet sein. Das Trigger-Signal kann auf einer Fahrzeugbeschleunigung basieren, welche außerhalb des Reifendrucksensors erfasst wird.

Gemäß einem Ausführungsbeispiel des ersten Aspekts
- basiert das Detektieren auf zumindest einer der zumindest einen erfassten Beschleunigung.

Die erfasste Beschleunigung kann insbesondere eine Querbeschleunigung sein, welche im Wesentlichen parallel zur Rotationsachse des Rads erfasst wird. Die Querbeschleunigung kann bei einer Geradeausfahrt im Wesentlichen 0G entsprechen, mit zufälligen Abweichungen beispielsweise unterhalb von 0,01G, 0,05G oder 0,1G. Beispielsweise kann für Querbeschleunigungen (z.B. betragsmäßig) oberhalb eines vordefinierten oberen Querbeschleunigungsschwellwerts eine Kurvenfahrt (insbesondere der Beginn einer Kurvenfahrt) detektiert werden. Beispielsweise kann für Querbeschleunigungen (z.B. betragsmäßig) unterhalb eines vordefinierten unteren Querbeschleunigungsschwellwerts eine Geradeausfahrt (insbesondere der Beginn einer Geradeausfahrt/ Ende einer Kurvenfahrt) detektiert werden. Der obere Querbeschleunigungsschwellwert kann größer sein als der untere Querbeschleunigungsschwellwert. Hierdurch wird eine Hysterese der Kurvenfahrtdetektion erreicht. Ein unterer und/oder oberer Querbeschleunigungsschwellwert kann beispielsweise 0,1G, 0,2G, 0,3G, 0,5G, 0,6G, 0,7G, 0,8G, 0,9G, 1G oder höhere Beschleunigungswerten entsprechen. G steht für die Erdbeschleunigung von 9,81m/s^2.

Der obere und/oder untere Querbeschleunigungsschwellwert kann abhängig von einer Geschwindigkeit des Fahrzeugs und/oder einer Drehgeschwindigkeit des Rads und/oder der Reifendrucksensoranordnung sein.

Beispielsweise kann die Richtung der Kurvenfahrt ebenfalls basierend auf der Beschleunigung detektiert werden. Beispielsweise kann ein Vorzeichen einer Querbeschleunigung (beispielsweise in Kombination mit einer Drehrichtung) als Basis zur Detektion der Richtung der Kurvenfahrt herangezogen werden.

Gemäß einem Ausführungsbeispiel des ersten Aspekts
- repräsentiert die Querbeschleunigungsindikation eine Querbeschleunigung während zumindest einer Kurvenfahrt.

Die Kurvenfahrt kann insbesondere eine (z.B. von der Reifendrucksensoranordnung) detektierte Kurvenfahrt sein. Beispielsweise kann die Reifendrucksensoranordnung mit einem Beginn und/oder einem Detektieren eines Beginns der Kurvenfahrt beginnen, die Querbeschleunigung während einer Kurvenfahrt zu erfassen. Alternativ oder zusätzlich kann die Reifendrucksensoranordnung mit einem Ende und/oder einem Detektieren des Endes der Kurvenfahrt das Erfassen der Querbeschleunigung beenden. Ein Erfassen der Querbeschleunigung kann hierbei eine oder mehrere Einzelmessungen der Querbeschleunigung (z.B. während der Kurvenfahrt) umfassen.

Es wurde erkannt, dass basierend auf einer Querbeschleunigung, die während einer Kurvenfahrt wirkt, eine Erkennung der Radposition des Rads (und/oder eines an dem Rad angeordneten Reifendrucksensors) ermöglicht werden kann. Denn auf die Räder und die an ihnen angeordnete Reifendrucksensoranordnungen verschiedener Radpositionen wirken bei einer Kurvenfahrt des Fahrzeugs unterschiedliche Querbeschleunigungen. Beispielsweise können auf hintere Räder höhere Querbeschleunigungen wirken als auf vordere, beispielsweise in Abhängigkeit von einem Drehpunkt des Fahrzeugs, insbesondere, wenn der Drehpunkt in Fahrtrichtung räumlich hinter einer Mehrzahl von Radpositionen angeordnet ist.

Gemäß einem Ausführungsbeispiel des ersten Aspekts
- ist die Querbeschleunigung über zumindest zwei oder mehr Kurvenfahrten gemittelt, und/oder
- ist die Querbeschleunigung über zumindest zwei oder mehr Kurvenfahrten gemittelt, wobei die Kurvenfahrten jeweils die gleiche Richtung aufweisen und/oder
- entspricht die Querbeschleunigung einem Mittelwert, einem Median, einem Maximalwert und/oder einem Minimalwert über mehrere einzelne gemessene Querbeschleunigungswerte und/oder Kombinationen hieraus.

Es wurde erkannt, das Querbeschleunigungen fluktuieren können, insbesondere unter dem Einfluss der in einem Fahrzeug herrschenden Umgebungsbedingungen, beispielsweise kombiniert mit einer punktuellen Erfassung in zeitlichen Abständen, sodass eine substantielle Streuung von Messwerten vorliegen kann.

Demnach wird vorgeschlagen, mehrere gemessene Querbeschleunigungen zu kombinieren, insbesondere zu mitteln, insbesondere über mehrere Kurvenfahrten zu mitteln. Beispielsweise kann ein Mitteln der Messwerte die Berechnung eines Mittelwerts, Medians, gewichteten Mittelwerts, geometrischen Mittelwerts und/oder Kombinationen hieraus aus mehreren Querbeschleunigungswerten umfassen. Alternativ oder zusätzlich kann anstatt des Mittelns der Messwerte die Berechnung eines Maximalwerts und/oder Minimalwerts und/oder eines Perzentils über mehrere Querbeschleunigungswerte vorgesehen sein.

Wenn vorliegend eine Größe (z.B. Beschleunigung) als gemittelt offenbart ist, umfasst dies eine Zusammenfassung mehrerer Messwerte (z.B. erfasster Beschleunigungen) zu einem Mittelwert, Median, Maximalwert, Minimalwert, Perzentil und/oder Kombinationen hieraus.

Querbeschleunigungen können über Kurvenfahrten der gleichen Richtung (z.B. rechts oder links in Fahrtrichtung) gemittelt werden. Bei Kurvenfahrten in verschiedene Richtungen können Querbeschleunigungswerte ein gegensätzliches Vorzeichen aufweisen. Alternativ oder zusätzlich kann der Absolutwert (Betrag) der Querbeschleunigung gemittelt werden. Hierbei kann eine Differenzierung der Richtung der Kurvenfahrt entfallen.

Alternativ oder zusätzlich können (z.B. über mehrere Kurvenfahrten der gleichen Richtung summierte) Querbeschleunigungen einer der beiden Richtungen der Kurvenfahrten von Querbeschleunigungen der anderen der beiden Richtungen der Kurvenfahrten subtrahiert werden.

Die Querbeschleunigung (z.B. erfasst während einer einzelnen Kurvenfahrt und/oder in zumindest zwei oder mehr verschiedenen Kurvenfahrten) kann einem Mittelwert, einem Median, einem Maximalwert und/oder einem Minimalwert über mehrere einzelne erfasste Querbeschleunigungswerte entsprechen.

Beispielsweise kann die Querbeschleunigung innerhalb einer Kurvenfahrt mittels einer ersten Metrik aus mehreren Messungen zusammengefasst werden (z.B. zu einem Mittelwert, einem Median, einem Maximalwert und/oder einem Minimalwert) und zusätzlich können Querbeschleunigungen mehrerer Kurvenfahrten (z.B. jeweils zusammengefasst mit der ersten Metrik) mit einer zweiten Metrik (z.B. zu einem Mittelwert, einem Median, einem Maximalwert und/oder einem Minimalwert) zusammengefasst werden. Die erste Metrik und die zweite Metrik können identisch zueinander sein oder unterschiedlich sein.

Gemäß einem Ausführungsbeispiel des ersten Aspekts
- umfasst das Kommunikationssignal ferner eine Kurvenrichtungsindikation, wobei die Kurvenrichtungsindikation eine Richtung einer Kurvenfahrt repräsentiert, und/oder
- umfasst das Kommunikationssignal ferner eine Kurvenanzahlindikation, wobei die Kurvenanzahlindikation eine Anzahl von durchfahrenen Kurvenfahrten repräsentiert, und/oder
- umfasst das Kommunikationssignal ferner eine Drehgeschwindigkeitsindikation, wobei die Drehgeschwindigkeitsindikation eine Drehgeschwindigkeit des Rads repräsentiert, und/oder
- umfasst das Kommunikationssignal ferner eine Drehgeschwindigkeitsindikation, wobei die Drehgeschwindigkeitsindikation eine Drehgeschwindigkeit des Rads während einer Kurvenfahrt repräsentiert, und/oder
- umfasst das Kommunikationssignal ferner eine Drehrichtungsindikation, wobei die Drehrichtungsindikation eine Drehrichtung des Rads repräsentiert, und/oder
- umfasst das Kommunikationssignal ferner eine Identifikation der Reifendrucksensoranordnung und/oder
- umfasst das Kommunikationssignal ferner eine Zeitindikation, wobei die Zeitindikation der Querbeschleunigungsindikation zugeordnet ist und/oder wobei die Zeitindikation eine Zeitdauer oder einen Zeitpunkt repräsentiert.

Eine Kurvenrichtungsindikation kann beispielsweise einen Beschleunigungswert, insbesondere einer erfassten Querbeschleunigung umfassen. Auch kann die Kurvenrichtungsindikation ein Informationselement umfassen, das die Kurvenrichtung angibt. Beispielsweise kann das Informationselement ein Bit (z.B. nur ein Bit, z.B. nur ein einzelnes Bit) umfassen.

Eine Kurvenanzahlindikation kann beispielsweise eine Anzahl von Kurven angeben, während derer eine (z.B. gemittelte) Querbeschleunigung erfasst wurde.

Das Kommunikationssignal kann ferner eine Drehgeschwindigkeitsindikation des Rads umfassen. Die Drehgeschwindigkeitsindikation repräsentiert die Drehgeschwindigkeit des Rads und/oder der Reifendrucksensoranordnung. Die Drehgeschwindigkeitsindikation kann die Drehgeschwindigkeit umfassen. Auch möglich ist, dass die Drehgeschwindigkeitsindikation (z.B. lediglich) ein Ableiten der Drehgeschwindigkeit ermöglicht. Beispielsweise kann die Drehgeschwindigkeitsindikation in diesem Fall eine Beschleunigung umfassen. Beispielsweise kann die Drehgeschwindigkeitsindikation einen Beschleunigungswert, insbesondere senkrecht zur Rotationsachse, umfassen.

Insbesondere kann die Drehgeschwindigkeitsindikation eine Geschwindigkeit (z.B. des Fahrzeugs) während einer Kurvenfahrt angeben, insbesondere der Kurvenfahrt, während derer eine Querbeschleunigung erfasst wurde.

Das Kommunikationssignal kann ferner eine Drehrichtungsindikation des Rads umfassen. Die Drehrichtungsindikation des Rads kann gleichermaßen eine Drehrichtungsindikation der Reifendrucksensoranordnung sein. Die Drehrichtungsindikation repräsentiert eine Drehrichtung des Rads und/oder der Reifendrucksensoranordnung bei Drehung um die Radachse, an welcher das Rad gelagert ist (auch mit Rotationsachse bezeichnet), insbesondere, während sich das Fahrzeug vorwärts bewegt. Die Drehrichtungsindikation versteht sich insbesondere nicht als eine Indikation der Drehrichtung senkrecht zur Rotationsachse, wie sie beispielsweise beim Lenken auftritt. Die Drehrichtungsindikation lässt einen Rückschluss darauf zu, ob sich das Rad in Vorwärtsfahrtrichtung auf der linken oder der rechten Seite des Fahrzeugs befindet. Die Drehrichtungsindikation kann beispielsweise eine Drehrichtung, insbesondere eine abgeleitete Drehrichtung, umfassen. Auch möglich ist, dass die Drehrichtungsindikation lediglich ein Ableiten der Drehrichtung ermöglicht, beispielsweise kann die Drehrichtungsindikation in diesem Fall eine Beschleunigung umfassen.

Eine Querbeschleunigungsindikation, Drehwinkelindikation und/oder Drehgeschwindigkeitsindikation kann beispielsweise als ein Index zu einer Tabelle übermittelt werden. Beispielsweise kann lediglich eine begrenzte Anzahl von verschiedenen repräsentierten Werten vorgesehen sein, beispielsweise bis zu 2, 4, 8, 16, 32, 64, 128, 256, 512 oder 1024 Werte. Die jeweilige Indikation kann in diesem Falle beispielsweise als eine Abfolge von Bits repräsentiert werden und beispielsweise in dieser Form in dem Kommunikationssignal enthalten sein. Eine Drehrichtungsindikation kann beispielsweise durch ein einziges Bit repräsentiert werden.

Eine Identifikation der Reifendrucksensoranordnung kann beispielsweise dem Identifizieren der Reifendrucksensoranordnung dienen. Beispielsweise kann die Identifikation vordefiniert sein. Beispielsweise umfasst die Identifikation eine Identifikationsnummer, eine Zeichenfolge, einen Index und/oder Kombinationen hieraus. Die Identifikation kann beispielsweise eine eindeutige Kennung der Reifendrucksensoranordnung sein. D. h., dass die Identifikationen beliebiger zwei Reifendrucksensoranordnungen (z.B. an verschiedenen Radpositionen), insbesondere der Reifendrucksensoren, welche an einem Fahrzeug angeordnet sind, voneinander verschieden sind. Ausgehend von der Identifikation kann damit die Reifendrucksensoranordnung eindeutig identifiziert werden. Die Identifikation der Reifendrucksensoranordnung kann beispielsweise fest einprogrammiert sein, beispielsweise ab Herstellung zumindest einer Komponente der Reifendrucksensoranordnung. Alternativ oder zusätzlich kann die Identifikation der Reifendrucksensoranordnung veränderlich, insbesondere programmierbar sein. Beispielsweise wird die Identifikation der Reifendrucksensoranordnung in einem Konfigurationsprozess, beispielsweise beim Montieren der Reifendrucksensoranordnung am Fahrzeug, festgelegt.

Ferner kann das Kommunikationssignal eine Zeitindikation enthalten. Die Zeitindikation kann der Querbeschleunigungsindikation zugeordnet sein. Beispielsweise kann die Zeitindikation für eine in dem Kommunikationssignal enthaltene Querbeschleunigungsindikation gelten. Beispielsweise kann die Zeitindikation eine Zeitdauer oder einen Zeitpunkt repräsentiert. Beispielsweise kann die Zeitindikation eine Zeitspanne angeben, während derer der die Querbeschleunigung erfasst wurde. Beispielsweise kann die Zeitindikation einen Beginn, ein Ende und/oder eine Dauer einer Kurvenfahrt (z.B. der Kurvenfahrt, während derer die Querbeschleunigung erfasst wurde) repräsentieren.

Gemäß einem Ausführungsbeispiel des ersten Aspekts
- ist das Erfassen der Querbeschleunigungsindikation abhängig von einer Drehgeschwindigkeitsindikation des Rads und/oder
- ist das Erfassen der Querbeschleunigungsindikation abhängig von einer Drehrichtungsindikation des Rads und/oder
- ist das Erfassen der Querbeschleunigungsindikation abhängig von einer Kurvenfahrt, insbesondere von dem Detektieren eines Beginns einer Kurvenfahrt und/oder eines Endes einer Kurvenfahrt und/oder einer Richtung der Kurvenfahrt

Das Erfassen kann hierbei insbesondere das Bestimmen und/oder Ableiten einer Querbeschleunigungsindikation aus zumindest einer (z.B. ohnehin) gemessenen Querbeschleunigung meinen. Beispielsweise kann mit Erfassen allerdings auch das Messen der Querbeschleunigung mittels eines Beschleunigungssensors gemeint sein.

Beispielsweise kann das Erfassen (und/oder Bestimmen und/oder Ableiten) der Querbeschleunigungsindikation abhängig von einer Drehgeschwindigkeit (z.B. erfasst von der Reifendrucksensoranordnung, z.B. abhängig von einer Beschleunigung, insbesondere radialen Beschleunigung) sein. Beispielsweise kann das Erfassen (und/oder Bestimmen und/oder Ableiten) der Querbeschleunigungsindikation auf Drehgeschwindigkeiten des Rads oberhalb eines oberen Drehgeschwindigkeitsschwellwerts beschränkt sein. Es wurde erkannt, dass Unterschiede zwischen den erfassten Querbeschleunigungen an unterschiedlichen Radpositionen besonders groß ausfallen, wenn die Geschwindigkeit des Fahrzeugs hoch ist. Der obere Drehgeschwindigkeitsschwellwert kann beispielsweise mindestens (z.B. eine äquivalente Fahrzeuggeschwindigkeit, die sich ausgehend von der Drehgeschwindigkeit über den Radius des Rades ungefähr bestimmen lässt) 5 km/h, 10 km/h, 15 km/h, 20 km/h, 25 km/h, 30 km/h, 40 km/h, 50 km/h, 60 km/h, 70 km/h, 80 km/h,90 km/h, 100 km/h, 110 km/h, 120 km/h, 130 km/h, 140 km/h, 150 km/h mehr betragen.

Beispielsweise kann das Erfassen (und/oder Bestimmen und/oder Ableiten) der Querbeschleunigungsindikation abhängig von einer Drehrichtung des Rads sein. Beispielsweise kann die Querbeschleunigungsindikation (z.B. nur) bei einer Vorwärtsfahrt des Fahrzeugs erfasst (und/oder bestimmt und/oder abgeleitet) werden.

Ferner kann das Erfassen (und/oder Bestimmen und/oder Ableiten) der Querbeschleunigungsindikation abhängig von einer Kurvenfahrt sein, insbesondere von einem Beginn und/oder einem Detektieren eines Beginns einer Kurvenfahrt und/oder eines Endes einer Kurvenfahrt und/oder einer Richtung der Kurvenfahrt. Die Kurvenfahrt und/oder der Beginn, das Ende oder die Richtung der Kurvenfahrt kann insbesondere basierend auf der zumindest einen erfassten Beschleunigung bestimmt werden. Das Erfassen (und/oder Bestimmen und/oder Ableiten) der Querbeschleunigungsindikation kann auf Kurvenfahrten beschränkt sein, beispielsweise auf Kurvenfahrten einer Kurvenrichtung. Insbesondere kann während Geradeausfahrten des Fahrzeugs ein Erfassen (und/oder Bestimmen und/oder Ableiten) der Querbeschleunigung und/oder Querbeschleunigungsindikation unterbunden werden.

Gemäß einem Ausführungsbeispiel des ersten Aspekts umfasst das Verfahren ferner
- Bestimmen und/oder Ableiten, einer Drehwinkelindikation, einer Drehrichtungsindikation und/oder einer Drehgeschwindigkeitsindikation aus der zumindest einen erfassten Beschleunigung.

Die Drehwinkelposition des Rads, einer Drehrichtung des Rads und/oder einer Drehgeschwindigkeit des Rads kann insbesondere jeweils mit der Drehwinkelposition der Reifendrucksensoranordnung, einer Drehrichtung der Reifendrucksensoranordnung und/oder einer Drehgeschwindigkeit der Reifendrucksensoranordnung übereinstimmen.

Die zumindest eine erfasste Beschleunigung, insbesondere soweit diese senkrecht zur Rotationsachse des Rads erfasst wird, ist zumindest teilweise von der Erdbeschleunigung abhängig. Eine Drehwinkelposition kann damit aus der zumindest einen erfassten Beschleunigung abgeleitet und/oder bestimmt werden. Beispielsweise kann ausgehend von dem Betrag und dem Vorzeichen der zumindest einen erfassten Beschleunigung abgeleitet werden, welcher Winkel zwischen der Erfassungsachse, in welcher die zumindest eine erfasste Beschleunigung erfasst wird, und einem Erdbeschleunigungsvektor, welcher zum Zentrum des Planeten ausgerichtet ist, auf welchem sich das Fahrzeug befindet, bestimmt werden. Dieser Winkel (beispielsweise plus einem konstanten Offset-Winkel) kann als die Drehwinkelposition betrachtet werden.

Falls sich das Rad in Rotation befindet, ist die Erdbeschleunigung überlagert von einer Zentrifugalbeschleunigung. Falls die Erfassungsachse, in welcher der Beschleunigungssensor die zumindest eine erfasste Beschleunigung erfasst, senkrecht zur Rotationsachse des Rads ausgerichtet ist, ist die erfasste Zentrifugalbeschleunigung bei konstanter Geschwindigkeit (z.B. Drehgeschwindigkeit und/oder Fahrzeuggeschwindigkeit) in etwa konstant über die Zeit. Somit kann, in einer einfachen Ausgestaltung, von der erfassten Beschleunigung die konstante Zentrifugalbeschleunigung abgezogen werden und somit die von der Erdbeschleunigung hervorgerufene Komponente von der zumindest einen erfassten Beschleunigung isoliert werden. Beispielsweise kann die Zentrifugalbeschleunigung als der Mittelwert der zumindest einen erfassten Beschleunigung über eine Umdrehung des Rads und/oder über eine vordefinierte Zeitspanne bestimmt werden.

Zur Bestimmung und/oder Erfassung der Drehwinkelposition aus der zumindest einen erfassten Beschleunigung können zumindest zwei voneinander verschiedene Erfassungsachsen notwendig sein, in welchen die Beschleunigung erfasst wird. Die beiden Erfassungsachsen sind hierbei zumindest teilweise senkrecht zur Rotationsachse des Rads ausgerichtet und in Projektion entlang der Rotationsachse voneinander verschieden. Alternativ ist es möglich, die Beschleunigungen lediglich in einer Erfassungsachse senkrecht zur Rotationsachse zu erfassen und hieraus die Drehwinkelposition abzuleiten. Beispielsweise kann hierbei, neben einer skalaren Beschleunigung, eine Drehrichtungsinformationen des Rads hinzugenommen werden, um die Drehwinkelposition abzuleiten und/oder zu bestimmen.

Durch Ableitung der Drehgeschwindigkeit kann diese in die Ausführung des Verfahrens mit einfließen. Beispielsweise kann das Senden des Kommunikationssignals von der abgeleiteten Drehgeschwindigkeit abhängig sein. Beispielsweise kann das Senden nur bei Drehgeschwindigkeiten oberhalb einer bestimmten Mindestdrehgeschwindigkeit durchgeführt werden. Im Stillstand könnten sich andere Fahrzeuge in der Nähe des Fahrzeugs befinden, welche die gesendeten Kommunikationssignale empfangen könnten. Fehlzuordnungen können die Folge sein. Durch ein Senden oberhalb der Mindestdrehgeschwindigkeit ist dieses Risiko geringer.

Auch die Drehrichtung des Rads und/oder der Reifendrucksensoranordnung kann aus der zumindest einen erfassten Beschleunigung abgeleitet und/oder bestimmt werden. Hierbei kann ebenfalls die von der Erdbeschleunigung verursachte Beschleunigungskomponente in einer Erfassungsachse und/oder insbesondere in zwei Erfassungsachsen, in welchen die Beschleunigung erfasst wird, betrachtet werden. Die zwei Erfassungsachsen können beispielsweise im Wesentlichen senkrecht zueinander und jeweils im Wesentlichen senkrecht zur Rotationsachse ausgerichtet sein. Die Drehrichtung kann beispielsweise unter Kenntnis eines Winkels zwischen den zumindest zwei Erfassungsachsen, in welchen die Beschleunigung erfasst wird, abgeleitet und/oder bestimmt werden.

Schließlich kann auch eine Drehgeschwindigkeit des Rads und/oder der Reifendrucksensoranordnung basierend auf der zumindest einen erfassten Beschleunigung abgeleitet und/oder bestimmt werden. Auch die Geschwindigkeit des Fahrzeugs kann auf diese Art, beispielsweise unter Berücksichtigung des Reifenumfangs, abgeleitet und/oder bestimmt werden. Hierbei kann beispielsweise, zusätzlich zu der Beschleunigung, eine Zeitinformation herangezogen werden. Beispielsweise kann die Zeitspanne zwischen zwei Ereignissen gemessen werden, wobei die Ereignisse jeweils einmal pro Umdrehung auftreten. Das Ereignis kann beispielsweise ein aus der Beschleunigung abgeleitete Kontakt eines Bereichs, in welchem die Reifendrucksensoranordnung angeordnet ist, mit dem Boden umfassen. Beispielsweise kann das Ereignis in diesem Fall eine Erschütterung sein. Auch kann als das Ereignis das Erreichen eines betragsmäßig maximalen (beispielsweise positiven und/oder negativen) Beschleunigungswerts angenommen werden. Die Drehgeschwindigkeit kann insbesondere unter Heranziehung einer erfassten Beschleunigung entlang einer einzigen Erfassungsachse bestimmt und/oder abgeleitet werden.

Gemäß einem Ausführungsbeispiel des ersten Aspekts
- ist das Senden abhängig von einer Kurvenfahrt, insbesondere von dem Detektieren eines Beginns der Kurvenfahrt und/oder eines Endes der Kurvenfahrt und/oder einer Richtung der Kurvenfahrt.

Beispielsweise kann das Kommunikationssignal bei Beginn und/oder Ende und/oder während einer Kurvenfahrt gesendet werden.

Gemäß einem zweiten Aspekt der Erfindung wird eine Reifendrucksensoranordnung für Fahrzeuge, insbesondere Nutzfahrzeuge, vorgeschlagen, umfassend einen Drucksensor und Mittel, die dazu eingerichtet sind, das Verfahren gemäß dem ersten Aspekt auszuführen und/oder zu steuern.

Die Reifendrucksensoranordnung gemäß dem zweiten Aspekt ist insbesondere dazu geeignet, an dem Rad eines Fahrzeugs angeordnet, insbesondere an dem Rad befestigt, zu werden. Beispielsweise kann die Reifendrucksensoranordnung ein Befestigungsmittel umfassen und/oder dazu eingerichtet sein, mittels eines Befestigungsmittels an dem Rad befestigt zu werden. Beispielsweise können die Befestigungsmittel an einem Gehäuse der Reifendrucksensoranordnung angeordnet sein.

Beispielsweise kann die Reifendrucksensoranordnung an der Felge des Rads angeordnet werden, beispielsweise mit einem Spanngurt um die Felge gespannt werden. Auch eignet sich die Umgebung eines Ventils des Rads zur Befestigung der Reifendrucksensoranordnung. Die Reifendrucksensoranordnungen kann beispielsweise im Innenraum des Reifens in der Nähe des Ventils, beispielsweise mit dem Ventil verbunden, angeordnet sein. Alternativ kann die Reifendrucksensoranordnungen außen an der Felge im Bereich des Ventils angeordnet sein. In diesem Fall muss eine fluidische Verbindung zwischen dem Reifendrucksensor und einem Innenraum des Ventils, welcher mit dem Innenraum des Reifens verbunden ist, vorgesehen werden. Eine fluidische Verbindung ist insbesondere eine gasdurchlässige Verbindung, welche einen Druckausgleich zwischen den durch die fluidische Verbindung verbundenen Volumina zulässt. Auch möglich ist es, die Reifendrucksensoranordnung mit einem flexiblen Befestigungselement, beispielsweise einem Band, lose mit der Felge und/oder dem Reifen zu verbinden, sodass die Reifendrucksensoranordnung bei Rotation des Rads durch die auf die Reifendrucksensoranordnung einwirkende Zentrifugalkraft in den Zwischenraum zwischen Reifen und Felge gehoben wird, und durch das flexible Befestigungselement gehalten wird. Alternativ oder zusätzlich kann die Reifendrucksensoranordnung an dem Reifen angeordnet sein. Beispielsweise kann die Reifendrucksensoranordnung an eine Innenwand des Reifens anvulkanisiert werden.

Die Reifendrucksensoranordnung umfasst einen Drucksensor. Der Drucksensor kann beispielsweise kapazitiv, induktiv, piezoelektrisch und/oder piezoresistiv aufgebaut sein. Der Drucksensor ist fluidisch mit einem Innenraum des Reifens verbunden. Beispielsweise ist der Drucksensor an einem Außenbereich der Reifendrucksensoranordnung angebracht. Auch möglich ist, ein Gehäuse der Reifendrucksensoranordnung zumindest mit einer Öffnung zu versehen, mittels derer ein Druckausgleich zwischen einem Innenraum des Gehäuses und dem Innenraum des Reifens hergestellt werden kann.

Die Reifendrucksensoranordnung kann insbesondere zumindest zwei oder mehr Drucksensoren umfassen. Hierdurch kann eine Redundanz geschaffen werden, was eine Ausfallwahrscheinlichkeit der Reifendrucksensoranordnung reduziert. Gleichzeitig kann die Messgenauigkeit erhöht werden.

Die Mittel zur Ausführung des Verfahrens gemäß des ersten Aspekts können beispielsweise Rechenmittel umfassen. Rechenmittel können beispielsweise zumindest einen Prozessor, einen Speicher, einen Microcontroller, ein Field Programmable Gate Array (FPGA), einen Applikationsspezifischen Integrierten Schaltkreis (ASIC) und/oder Kombinationen hieraus umfassen. Beispielsweise kann ein Speicher der Rechenmittel Instruktionen umfassen, welche, wenn sie von den zumindest einen Rechenmittel ausgeführt werden, die Reifendrucksensoranordnung dazu veranlassen, das Verfahren gemäß dem ersten Aspekt auszuführen und/oder zu steuern. Beispielsweise können hierfür funktionale Einheiten vorgesehen sein, welche die Schritte des Verfahrens steuern und/oder ausführen. Eine funktionale Einheit kann beispielsweise mit Instruktionen korrespondieren, welche die Steuerung und/oder Ausführung der jeweiligen Schritte des Verfahrens bewirken. Alternativ oder zusätzlich kann eine funktionale Einheit einer Verschaltung eines programmierten FPGA, ein Teilbereich eines ASIC und/oder Kombinationen hieraus sein.

Die Reifendrucksensoranordnung kann ferner zumindest einen Energiespeicher umfassen, beispielsweise eine Batterie und/oder einen Akkumulator. Beispielsweise kann der Energiespeicher wiederaufladbar sein.

Die Reifendrucksensoranordnung kann ferner ein Zeiterfassungsmittel umfassen, welches die Erfassung verstrichener Zeitspannen erlaubt. Insbesondere kann das Zeiterfassungsmittel zur Erfassung, Bestimmung und/oder Ableitung der Zeitindikation eingerichtet sind. Beispielsweise kann das Zeiterfassungsmittel ein Timer (beispielsweise eine Microcontrollers) sein, beispielsweise basierend auf einem Quarz.

Die Reifendrucksensoranordnung ist insbesondere dazu eingerichtet, den Reifeninnendruck des Rades zu erfassen, an welchem die Reifendrucksensoranordnung angeordnet ist.

Gemäß einem Ausführungsbeispiel des zweiten Aspekts
- ist der Drucksensor für das Erfassen des Innendrucks eines Reifens eines Rads eingerichtet.

Der Drucksensor kann, in den im Hinblick auf das Verfahren gemäß dem ersten Aspekt offenbarten Vorgehensweisen, den Innendruck eines Reifens eines Rads erfassen. Insbesondere kann der Drucksensor den Innendruck des Reifens erfassen, an dem die Reifendrucksensoranordnung angeordnet ist.

Gemäß einem Ausführungsbeispiel des zweiten Aspekts
- umfasst die Reifendrucksensoranordnung ein Kommunikationsmittel, wobei das Kommunikationsmittel für das Senden des Kommunikationssignals eingerichtet ist.

Das Kommunikationsmittel kann beispielsweise mit den Mitteln, beispielsweise mit einem Rechenmittel, der Reifendrucksensoranordnung verbunden sein, beispielsweise durch eine Kommunikationsverbindung, insbesondere durch eine drahtgebundene Kommunikationsverbindung.

Das Kommunikationsmittel ist insbesondere ein drahtloses Kommunikationsmittel. Das Kommunikationsmittel kann beispielsweise zumindest eine Antenne umfassen, über welche das Kommunikationsmittel elektromagnetische Wellen aussenden kann. Das Kommunikationsmittel kann beispielsweise dazu eingerichtet sein, auf einer Trägerfrequenz ein Signal (beispielsweise das Kommunikationssignal) aufzumodulieren. Beispielsweise kann die Trägerfrequenz im Bereich einiger hundert MHz liegen, beispielsweise zwischen 100 und 800 MHz, beispielsweise 433 MHz. Beispielsweise ist das Kommunikationsmittel dazu eingerichtet, gemäß einem drahtlosen Kommunikationsstandard Nachrichten auszusenden. Beispielsweise kann dieser Kommunikationsstandard ein Bluetooth Standard sein (https://www.bluetooth.com), Zigbee, ein anderer Kommunikationsstandard und/oder Kombinationen hieraus. Alternativ oder zusätzlich kann das Kommunikationsmittel dazu eingerichtet sein, eine paketbasierte Übermittlung von Daten zu ermöglichen.

Beispielsweise kann das das Kommunikationsmittel zu einem drahtlosen und unidirektionalen Senden eingerichtet sein. Beispielsweise kann das Kommunikationsmittel dazu eingerichtet sein, das Kommunikationssignal in Form eines Broadcasts aussenden. Das Kommunikationssignal und/oder das Senden des Kommunikationssignals kann hierbei nicht spezifisch für einen Empfänger sein sondern unspezifisch. Das Senden kann unabhängig von einer Rückmeldung zu der Sendung von einem Empfänger sein. Alternativ kann das Kommunikationsmittel zu einer bidirektionalen Kommunikation eingerichtet sein. In diesem Fall ist das Kommunikationsmittel in der Lage, sowohl zu senden (insbesondere das Kommunikationssignal), als auch zu empfangen, beispielsweise eine Empfangsbestätigung des Empfängers zu dem ausgesendeten Kommunikationssignal.

Gemäß einem Ausführungsbeispiel des zweiten Aspekts umfasst die Reifendrucksensoranordnung
- einen Beschleunigungssensor, wobei der Beschleunigungssensor dazu eingerichtet ist, die zumindest eine Beschleunigung umfassend eine Querbeschleunigung zu erfassen.

Die in Hinblick auf das Verfahren gemäß des ersten Aspekts offenbarten Erfassungsweisen sind hiermit ebenfalls für die Reifendrucksensoranordnung offenbart.

Der Beschleunigungssensor ist insbesondere dazu eingerichtet, eine, zwei oder drei Beschleunigungen zu erfassen, insbesondere in jeweils voneinander verschiedenen Erfassungsachsen.

Beispielsweise kann der Beschleunigungssensor sich in zumindest zwei einzelne Unterbeschleunigungssensoren aufteilen. Ein erster Unterbeschleunigungssensor kann beispielsweise in einer oder zwei oder drei Erfassungsachsen eine Beschleunigung erfassen. Beispielsweise kann der erste Unterbeschleunigungssensor mit dem Reifendrucksensoranordnung integriert sein und eine erste Beschleunigung entlang einer erstens Reinigungsachse erfassen, während darüber hinaus ein zweiter Unterbeschleunigungssensor getrennt von dem Reifendrucksensoranordnung vorgesehen ist. Der zweite Unterbeschleunigungssensor kann dazu eingerichtet sein, eine Beschleunigung in mindestens einer weiteren Erfassungsachse, welche sich von der ersten Erfassungsachse unterscheidet, zu erfassen. Auch möglich ist es, dass der zweite Unterbeschleunigungssensor zwei und/oder drei Beschleunigungen erfasst. Durch das Vorsehen eines weiteren Unterbeschleunigungssensor, zusätzlich zu einem bereits in dem Drucksensor integrierten Unterbeschleunigungssensor, kann besonders platzsparend und günstig eine weitere Erfassungsachse, in welcher eine Beschleunigung erfasst wird, bereitgestellt werden wodurch sich die Drehrichtung und die Drehwinkelposition ableiten und/oder bestimmen lässt.

Die Ausrichtung von zumindest zwei oder drei Erfassungsachsen, in welchen eine jeweilige Beschleunigung erfasst wird, ist insbesondere so gewählt, dass zumindest eine oder zwei in einer Einbauposition der Reifendrucksensoranordnung im Wesentlichen senkrecht zueinander und senkrecht zur Rotationsachse des Rads ausgerichtet sind während eine Erfassungsachse im Wesentlichen parallel zur Rotationsachse des Rads ausgerichtet ist.

Gemäß einem Ausführungsbeispiel des zweiten Aspekts umfasst die Reifendrucksensoranordnung ferner
- ein Ableitungs- und/oder Bestimmungsmittel, wobei das Ableitungs- und/oder Bestimmungsmittel für die Ableitung einer Kurvenfahrt, insbesondere eines Beginns einer Kurvenfahrt und/oder eines Endes einer Kurvenfahrt und/oder einer Richtung einer Kurvenfahrt, einer Anzahl von Kurvenfahrten, einer Drehwinkelposition, insbesondere einer Enddrehwinkelposition und/oder einer Anfangsdrehwinkelposition, einer Drehrichtung und/oder einer Drehgeschwindigkeit eingerichtet ist.

Das Ableitung- und/oder Bestimmungsmittel kann insbesondere ein Rechenmittel sein. Das Rechenmittel kann beispielsweise zumindest einen Prozessor, einen Speicher, einen Microcontroller, ein Field Programmable Gate Array (FPGA), einen Applikationsspezifischen Integrierten Schaltkreis (ASIC) und/oder Kombinationen hieraus umfassen. Beispielsweise kann ein Speicher der Mittel Instruktionen umfassen, welche, wenn sie von den zumindest einen Rechenmittel ausgeführt werden, die Reifendrucksensoranordnung dazu veranlassen, die Drehwinkelposition, die Drehrichtung und/oder die Drehgeschwindigkeit abzuleiten und/oder zu bestimmen. Beispielsweise kann das Ableiten und/oder Bestimmen auf der zumindest einen erfassten Beschleunigung basieren.

Die Ableitung und/oder Bestimmung der jeweiligen Größe kann, wie in der in Hinblick auf den ersten Aspekt offenbarten Art und Weise, erfolgen.

Gemäß einem dritten Aspekt der Erfindung wird ein Verfahren zur Reifendrucküberwachung eines Fahrzeugs, insbesondere Nutzfahrzeugs, ausgeführt durch eine Vorrichtung, vorgeschlagen, umfassend
- Empfangen eines Kommunikationssignals, jeweils umfassend eine jeweilige Reifendruckindikation eines Reifens eines Rads und eine jeweilige Querbeschleunigungsindikation eines Rads, von einer Reifendrucksensoranordnung, und
- Zuordnen einer Radposition zu der Reifendrucksensoranordnung, zumindest basierend auf der Querbeschleunigungsindikation.

Die Vorrichtung kann beispielsweise eine Steuerungseinheit eines (des) Fahrzeugs sein, beispielsweise eine Telematikeinheit (CTU).

Das vorgeschlagene Verfahren umfasst das Empfangen eines Kommunikationssignals durch eine Vorrichtung. Auch können mehrere Kommunikationssignale empfangen werden, beispielsweise zeitlich nacheinander. Beispielsweise wird das Kommunikationssignal von einem Kommunikationsmittel der Vorrichtung empfangen. Das Kommunikationssignal kann beispielsweise als Kommunikationssignal gemäß dem ersten und zweiten Aspekt der Erfindung ausgestaltet sein. Insbesondere kann das Kommunikationssignal von einer Reifendrucksensoranordnung empfangen werden, insbesondere einer Reifendrucksensoranordnung gemäß dem zweiten Aspekt.

Beispielsweise kann jeweils zumindest ein oder mehr Kommunikationssignale ausgehend von zumindest zwei oder mehr Reifendrucksensoranordnungen gesendet werden und von einem Empfänger (z.B. CTU) empfangen werden.

Weiterhin umfasst das Verfahren das Zuordnen einer Radposition zu der Reifendrucksensoranordnung (z.B. von der das Kommunikationssignal empfangen wurde), zumindest basierend auf der Querbeschleunigungsindikation.

Da die Querbeschleunigung charakteristisch für eine gegebene Radposition ist, kann eine Zuordnung zwischen der Reifendrucksensoranordnung, von der ausgehend das Kommunikationssignal umfassend die Querbeschleunigung empfangen wurde, und einer Radposition, basierend auf der Querbeschleunigung, vorgenommen werden. Beispielsweise kann hierfür ein Modell des maschinellen Lernens trainiert werden, welches Querbeschleunigungen als Eingangsgrößen akzeptiert und diesen die wahrscheinlichste Radposition als Ausgangsgröße zuordnet. Das Modell des maschinellen Lernens kann beispielsweise eine Support Vektor Maschine (SVM), ein neuronales Netz (z.B. Perzeptron oder tiefes neuronales Netzwerk), ein k-Nearest-Neighbor (kNN) Modell und/oder Kombinationen hieraus sein.

Beispielsweise kann zumindest eine der Reifendrucksensoranordnungen, von denen zumindest ein Kommunikationssignal empfangen wurde, einer Radposition zugeordnet werden. Alternativ können alle Reifendrucksensoranordnungen, von denen Kommunikationssignale empfangen wurden, einer Radposition zugeordnet werden.

Beispielsweise kann pro Reifendrucksensoranordnung eine Mindestanzahl von empfangenen Kommunikationssignalen erfordert werden, bis eine Zuordnung vorgenommen wird. Die Mindestanzahl kann beispielsweise 10, 50, 100, 500, 1000 oder mehr empfangene Kommunikationssignale betragen.

Gemäß einem Ausführungsbeispiel des dritten Aspekts
- umfasst das Kommunikationssignal ferner eine Kurvenrichtungsindikation, eine Drehgeschwindigkeitsindikation, eine Drehrichtungsindikation, eine Identifikation der Reifendrucksensoranordnung und/oder eine Zeitindikation.

Das in Hinblick auf den ersten und zweiten Aspekt Offenbarte gilt gleichermaßen für den dritten Aspekt.

Gemäß einem Ausführungsbeispiel des dritten Aspekts umfasst das Verfahren
- Bestimmen und/oder Ableiten einer Querbeschleunigung des Rads aus der Querbeschleunigungsindikation.

Die Querbeschleunigungsindikation kann allein genügen, um die Querbeschleunigung abzuleiten. Es können auch weitere Informationen, wie beispielsweise eine Tabelle, zu der die Querbeschleunigungsindikation einen Index umfasst, oder weitere Schritte wie z.B. die Auswertung einer von der jeweiligen Querbeschleunigungsindikation abgeleiteten Teilinformation notwendig sein.

Das in Hinblick auf den ersten und zweiten Aspekt Offenbarte gilt gleichermaßen für den dritten Aspekt.

Gemäß einem Ausführungsbeispiel des dritten Aspekts umfasst das Verfahren ferner
- Erfassen zumindest einer Fahrzeugbeschleunigung.

Die Fahrzeugbeschleunigung gibt insbesondere eine Beschleunigung des (z.B. gesamten) Fahrzeugs an. Die Fahrzeugbeschleunigung ist insbesondere zu unterscheiden von der zumindest einen Beschleunigung, welche von der Reifendrucksensoranordnung erfasst wird.

Beispielsweise kann die Fahrzeugbeschleunigung in der räumlichen Nähe zumindest eines oder mehrerer Räder erfasst werden, an denen zumindest eine oder mehrere Reifendrucksensoranordnungen angeordnet sind, von denen (z.B. jeweils) ausgehend zumindest ein Kommunikationssignal empfangen wird (die Reifendrucksensoranordnung senden das jeweilige Kommunikationssignal). Beispielsweise kann die Vorrichtung, welche das Verfahren ausführt, die Fahrzeugbeschleunigung erfassen, beispielsweise eine Telematikeinheit. Beispielsweise kann die Vorrichtung in der räumlichen Nähe zumindest einer Radachse (z.B. der Räder) angeordnet, beispielsweise in der räumlichen Nähe einer Mehrzahl (von z.B. drei) Radachsen eines Trailers. Eine räumliche Nähe kann gegeben sein, wenn der kleinste Abstand zwischen zwei Elementen, höchstens 3m oder 4m, vorzugsweise weniger als 10cm, 30cm, 50cm, 1m oder 2m, beträgt. Beispielsweise kann die Fahrzeugbeschleunigung innerhalb einer Fläche erfasst werden (z.B. kann dort ein entsprechender Beschleunigungssensor angeordnet sein), welche von zumindest 4 Radpositionen des Fahrzeugs aufgespannt wird.

Die Fahrzeugbeschleunigung kann in zumindest einer oder mehreren Erfassungsachsen erfasst werden. Die Fahrzeugbeschleunigung kann insbesondere eine Querbeschleunigung umfassen, welche im Wesentlichen entlang einer Erfassungsachse erfasst wird, welche parallel zu zumindest einer Rotationsachse zumindest eines Rads ausgerichtet ist. Auch kann die Fahrzeugbeschleunigung eine Beschleunigung entlang einer Längsachse des Fahrzeugs, beispielsweise im Wesentlichen senkrecht zu einer Rotationsachse und im Wesentlichen parallel zur Fahrbahn, umfassen. Hierdurch kann beispielsweise eine Beschleunigung und/oder Bremsung des Fahrzeugs in Fahrtrichtung detektiert werden.

Die Fahrzeugbeschleunigung kann beispielsweise als eine Vergleichsgröße für die Zuordnung zwischen Reifendrucksensoranordnungen und Radpositionen genutzt werden. Basierend auf der Fahrzeugbeschleunigung (insbesondere einer Querbeschleunigung) kann eine Kurvenfahrt detektiert werden. Auch kann basierend auf der Fahrzeugbeschleunigung ein Trigger-Signal ausgesendet werden, beispielsweise an zumindest eine oder mehrere Reifendrucksensoranordnungen. Beispielsweise kann das Trigger-Signal ausgesendet werden, wenn die Fahrzeugbeschleunigung (beispielsweise Querbeschleunigung) einen vordefinierten Fahrzeugbeschleunigungsschwellwert überschreitet. Das Trigger-Signal kann insbesondere dazu eingerichtet ist, die Reifendrucksensoranordnungen dazu zu veranlassen, eine Messung zu beginnen, beispielsweise eine Querbeschleunigung und/oder eine Querbeschleunigungsindikation zu erfassen.

Gemäß einem Ausführungsbeispiel des dritten Aspekts
- wobei das Zuordnen zumindest teilweise auf der empfangenen Querbeschleunigungsindikation einerseits und zumindest einer Referenzquerbeschleunigung für zumindest eine Radposition andererseits basiert und/oder
- wobei das Zuordnen zumindest teilweise auf der empfangenen Querbeschleunigungsindikation einerseits und zumindest einer der zumindest einen Fahrzeugbeschleunigung andererseits basiert.

Die Fahrzeugbeschleunigung ist beispielsweise eine erfasste Fahrzeugbeschleunigung.

Eine Möglichkeit, eine Zuordnung zwischen einer Radposition und einer Reifendrucksensoranordnung vorzunehmen, bedient sich einer Referenzquerbeschleunigung. Die Referenzquerbeschleunigung repräsentiert hierbei beispielsweise eine erwartete Referenzquerbeschleunigung für eine vordefinierte Radposition, beispielsweise für eine vordefinierte Geschwindigkeit und/oder einen vordefinierten Kurvenradius. Einer Referenzquerbeschleunigung ist damit eine Radposition zugeordnet. Die Referenzquerbeschleunigung ist beispielsweise empirisch bestimmt, beispielsweise basierend auf einer Vermessung eines bestimmten Fahrzeugs und/oder Fahrzeugmodells. Auch kann die Referenzquerbeschleunigung beispielsweise modellbasiert, beispielsweise basierend auf einer Simulation der Querbeschleunigung eines Rads an verschiedenen Radpositionen, beispielsweise für verschiedene Kurvenradien, Reifenarten, Untergründe und/oder Geschwindigkeiten (z.B. Drehgeschwindigkeit und/oder Fahrzeuggeschwindigkeit).

Beispielsweise kann eine Querbeschleunigung für eine gegebene Reifendrucksensoranordnung mit zumindest einer oder mehreren Referenzquerbeschleunigung verglichen werden. Die zu der erfassten Querbeschleunigung ähnlichste Referenzquerbeschleunigung kann ausgewählt werden und die ihr zugeordnete Radposition kann der Reifendrucksensoranordnung zugeordnet werden. Alternativ oder zusätzlich kann eine vordefinierte minimale Ähnlichkeit vorausgesetzt werden, ab der eine Zuordnung vorgenommen wird.

Ein Vergleich zwischen einer erfassten Querbeschleunigung und einer Referenzquerbeschleunigung kann beispielsweise mittels einer (z.B. absoluten und/oder relativen) Differenz bestimmt werden.

Alternativ oder zusätzlich kann das Zuordnen auf der empfangenen Querbeschleunigungsindikation und zumindest einer der zumindest einen Fahrzeugbeschleunigung basieren. Hierfür kann die empfangene Querbeschleunigungsindikation mit zumindest einer der zumindest einen Fahrzeugbeschleunigung verglichen werden. Beispielsweise kann die von der Querbeschleunigungsindikation repräsentierte Querbeschleunigung mit einer von der Fahrzeugbeschleunigung umfassten Fahrzeugquerbeschleunigung verglichen werden. Beispielsweise kann eine vordefinierte Relation zwischen einer Querbeschleunigung einer gegebenen Radposition und der Fahrzeugbeschleunigung genutzt werden, um eine Zuordnung zwischen der Reifendrucksensoranordnung und der Radposition vorzunehmen. Beispielsweise kann die vordefinierte Relation abhängig von einer Kurvenrichtung, einer Geschwindigkeit und/oder von einer Fahrzeugseite der Radpositionen sein. Eine Relation kann insbesondere ein Größenverhältnis sein. Beispielsweise kann die Relation beschreiben, dass Räder in einer vorderen, mittleren oder hinteren Radposition eine Querbeschleunigung erfahren, welche größer und/oder kleiner ist als die Fahrzeugbeschleunigung. Es können beispielsweise Momentanwerte der empfangenen Querbeschleunigungsindikation und der Fahrzeugbeschleunigung verglichen werden. Hierfür kann es beispielsweise hilfreich sein, wenn die Querbeschleunigung kurz (z.B. weniger als 100ms, 500ms, 1s, 5s, 10s oder 30s) vor dem Senden des Kommunikationssignals durch die Reifendrucksensoranordnung bestimmt wird.

Es können beispielsweise ein Median, ein Mittelwert, ein Minimalwert und/oder ein Maximalwert der Querbeschleunigungen einer Reifendrucksensoranordnungen mit der Fahrzeugbeschleunigung, insbesondere einer von der Fahrzeugbeschleunigung umfassten Querbeschleunigung, insbesondere deren Median, Mittelwert, Minimalwert und/oder Maximalwert, verglichen werden. Die jeweils zugrundeliegenden Messwerte können beispielsweise über einen vordefinierten Zeitraum (beispielsweise zumindest 1h, 2h, 6h, 10h, 12h, 20h, 24h, 50h, 2d, 5d, 1 Woche, 10d, 50d oder mehr) erfasst werden und/oder auf Kurvenfahrten beschränkt sein.

Gemäß einem Ausführungsbeispiel des dritten Aspekts umfasst das Verfahren ferner
- Empfangen eines weiteren Kommunikationssignals umfassend eine weitere Reifendruckindikation eines weiteren Reifens eines weiteren Rads und eine weitere Querbeschleunigungsindikation des weiteren Rads von einer weiteren Reifendrucksensoranordnung, und
- wobei das Zuordnen ferner auf der weiteren Querbeschleunigungsindikation basiert.

Es wurde erkannt, dass Räder an unterschiedlichen Radpositionen unterschiedliche Querbeschleunigungen erfahren. Es kann daher vorteilhaft sein, die von verschiedenen Reifendrucksensoranordnungen erfassten Querbeschleunigungen untereinander zu vergleichen.

Das Zuordnung kann vorliegend auf einem Vergleich zwischen der Querbeschleunigungsindikation und der weiteren Querbeschleunigungsindikation basieren.

Beispielsweise können zumindest zwei Querbeschleunigungen, welche von zwei verschiedenen Querbeschleunigungsindikationen zweier verschiedener Kommunikationssignale von zwei verschiedenen Reifendrucksensoranordnungen repräsentiert werden, miteinander verglichen werden. Beispielsweise kann bei diesem Vergleich eine vordefiniert jeweilige Zeitspanne und/oder eine Geschwindigkeit (z.B. Fahrzeuggeschwindigkeit oder Drehgeschwindigkeit) berücksichtigt werden, bei der die Querbeschleunigungen erfasst wurden.

Es können beispielsweise Momentanwerte der empfangenen Querbeschleunigungsindikationen verglichen werden. Beispielsweise kann der Vergleich auf Querbeschleunigungsindikationen beschränkt sein, welche innerhalb einer vordefinierte Zeitspanne vor dem Vergleichen als Kommunikationssignale empfangen wurden. Die vordefinierte Zeitspanne kann beispielsweise höchstens 1s, 5s, 10s, 30s oder 1min umfassen.

Es können beispielsweise ein jeweiliger Median, Mittelwert, Minimalwert und/oder Maximalwert und/oder ein Perzentil (beispielsweise das 5. oder zumindest das 60., 70., 80., 90., 95. oder 99. Perzentil) der Querbeschleunigungen zweier verschiedener Reifendrucksensoranordnungen verglichen werden. Insbesondere ein Maximalwert oder ein Perzentil kann (z.B. unabhängig von einer momentanen Geschwindigkeit des Fahrzeugs, z.B. über beliebige Betriebszustände (z.B. Kurven- oder Geradeausfahrt) und/oder vordefinierte Zeitspannen hinweg) für eine jeweilige Reifendrucksensoranordnung bestimmt werden und mit dem Maximum und/oder Perzentil anderer Reifendrucksensoranordnungen verglichen werden, sodass sich die Radposition ableiten lässt.

Beispielsweise kann basierend auf einer vordefinierten Relation zwischen den Querbeschleunigungen verschiedener Radpositionen eine Zuordnung zwischen einer Reifendrucksensoranordnung und einer Radposition vorgenommen werden. Beispielsweise kann die vordefinierte Relation abhängig von einer Kurvenrichtung und/oder von einer Fahrzeugseite der Radpositionen sein. Die vordefinierte Relation kann insbesondere ein Größenverhältnis sein, beispielsweise die Relation beschreiben, nach der Räder in einer vorderen, mittleren oder hinteren Radposition eine größere Beschleunigung erfahren als Räder in einer anderen der Radpositionen, beispielsweise für eine Links- und/oder Rechtskurve, beispielsweise für eine Fahrzeugseite (z.B. rechts oder links in Fahrtrichtung). Die Relation kann abhängig von einer Geschwindigkeit des Fahrzeugs und/oder von einer Drehgeschwindigkeit (z.B. des Rads) sein.

Beispielsweise kann ein Zuordnen alternativ oder zusätzlich ein Sortieren von Reifendrucksensoranordnungen basierend auf der von ihnen übermittelten Querbeschleunigungsindikationen umfassen. Beispielsweise können die übermittelten Laufwegindikationen der Reifendrucksensoranordnungen dem Wert nach aufsteigend mit einer von ihnen erfassten Querbeschleunigung sortiert werden. Beispielsweise können Reifendrucksensoranordnungen pro Fahrzeugseite sortiert werden und so in manchen Fällen bereits die Reihenfolge der zugehörigen Radpositionen ermittelt werden.

Beispielsweise kann der die Querbeschleunigung an einer Radposition und/oder Unterschiede zwischen Querbeschleunigungen unterschiedlicher Radpositionen, insbesondere während ein und derselben Kurvenfahrt, abhängig von einem Drehpunkt des Fahrzeugs sein. Ein Drehpunkt kann beispielsweise abhängig von permanenten Eigenschaften des Fahrzeugs sein (beispielsweise Fahrzeuggeometrie, -gewicht). Auch kann der Drehpunkt von einer Beladung, einem Reifendruck, einer Neigung des Fahrzeugs und/oder einer Stellung sogenannter Liftachsen abhängig sein, welche vom Boden angehoben und/oder zum Boden hin abgesenkt werden können. Insbesondere kann die Verteilung des Gewichts des Fahrzeugs und/oder seiner Ladung in Bezug auf die Räder variieren, z.B. kann der Schwerpunkt des Gewichts eher vorne/ hinten/rechts/links liegen.

Gemäß einem Ausführungsbeispiel des dritten Aspekts umfasst das Verfahren ferner
- Ableiten und/oder Bestimmen einer Kurvenrichtung aus der empfangenen Kurvenrichtungsindikation, einer Drehgeschwindigkeit aus der empfangenen Drehgeschwindigkeitsindikation, und/oder einer Drehrichtung aus der empfangenen Drehrichtungsindikation.

Ähnlich zur Querbeschleunigungsindikation kann die jeweilige Indikation (Kurvenrichtungsindikation, Drehgeschwindigkeitsindikation, und/oder Drehrichtungsindikation) allein genügen um die Information (Kurvenrichtung, Drehgeschwindigkeit, und/oder Drehrichtung) abzuleiten. Es können auch weitere Informationen, wie beispielsweise eine Tabelle, zu der die Indikation einen Index umfasst, oder weitere Schritte, wie z.B. die Auswertung einer von der jeweiligen Indikation umfassten Beschleunigung, genutzt werden.

Gemäß einem Ausführungsbeispiel des dritten Aspekts
- basiert das Zuordnen auf der empfangenen Kurvenrichtungsindikation und/oder der Kurvenrichtung, der empfangenen Drehgeschwindigkeitsindikation und/oder der Drehgeschwindigkeit, der empfangenen Drehrichtungsindikation und/oder der Drehrichtung, der empfangenen Zeitindikation und/oder der zumindest einen erfassten Fahrzeugbeschleunigung.

Das Zuordnen kann beispielsweise basierend auf der Kurvenrichtungsindikation und/oder der Kurvenrichtung eine Referenzquerbeschleunigung definieren, eine Relation zwischen Querbeschleunigungen an verschiedenen Radpositionen auswählen und/oder die Zuordnung auf vordefinierte Radpositionen einschränken.

Das Zuordnen kann beispielsweise basierend auf der Drehgeschwindigkeitsindikation durchgeführt werden. Das Zuordnen kann beispielsweise, basierend auf der Drehgeschwindigkeitsindikation, vor dem Zuordnen eine Filterung der Querbeschleunigungsindikationen vornehmen, um diese mit weiteren Querbeschleunigungsindikationen und/oder zumindest einer Referenzquerbeschleunigung zu vergleichen. Beispielsweise können erfasste Querbeschleunigungen unterhalb eines vordefinierten Drehgeschwindigkeitsschwellwerts außer Acht gelassen werden und/oder (z.B. nur) erfasste Querbeschleunigungen oberhalb eines vordefinierten Drehgeschwindigkeitsschwellwerts betrachtet werden. Hierdurch kann eine besonders starke Differenzierung der Querbeschleunigungswerte an verschiedenen Radpositionen erreicht werden. Die Differenzen der Querbeschleunigungswerte können nämlich mit der Geschwindigkeit des Fahrzeugs steigen. Der Drehgeschwindigkeitsschwellwert kann beispielsweise den in Hinblick auf den ersten Aspekt offenbarten unteren und/oder oberen Drehgeschwindigkeitsschwellwerten entsprechen.

Das Zuordnen kann beispielsweise basierend auf der Drehrichtungsindikation eine jeweilige Reifendrucksensoranordnung (z.B. zunächst, in einem ersten Schritt) einer Fahrzeugseite (z.B. links oder rechts in Fahrtrichtung) zuordnen.

Das Zuordnen kann, beispielsweise basierend auf der Zeitindikation, vor dem Zuordnen eine Filterung der Querbeschleunigungsindikationen vornehmen, um diese mit weiteren Querbeschleunigungsindikationen und/oder zumindest einer Referenzquerbeschleunigung zu vergleichen. Beispielsweise kann hierfür eine Zeitindikation für die Querbeschleunigungsindikation herangezogen werden und eine andere Zeitindikation für eine andere Querbeschleunigung (z.B. wobei die Zeitindikationen jeweils der Querbeschleunigung zugeordnet sind), mit dem die Querbeschleunigung verglichen werden soll

Das Zuordnen kann beispielsweise basierend auf der Fahrzeugbeschleunigung vorgenommen werden. Beispielsweise kann die Fahrzeugbeschleunigung herangezogen werden, um eine Kurvenfahrt zu detektieren. Querbeschleunigungen, die während der Kurvenfahrt als Querbeschleunigungsindikationen in Kommunikationssignalen empfangen werden, können verglichen werden.

Gemäß einem Ausführungsbeispiel des dritten Aspekts
- basiert die Referenzquerbeschleunigung auf einem weiteren Kommunikationssignal, wobei das weitere Kommunikationssignal von einer weiteren Reifendrucksensoranordnung stammt, und/oder
- ist die Referenzquerbeschleunigung einer Radposition vordefiniert und/oder
- ist die Referenzquerbeschleunigung einer Radposition empirisch bestimmt, insbesondere zumindest teilweise basierend auf der zumindest einen erfassten Beschleunigung und/oder auf einem Drehwinkelmesser, und/oder
- ist die Referenzquerbeschleunigung modellbasiert bestimmt, insbesondere basierend auf einer Simulation.

Die Referenzquerbeschleunigung kann beispielsweise auf einem weiteren Kommunikationssignal basieren. Insbesondere kann eine Querbeschleunigung einer anderen Reifendrucksensoranordnung (und/oder des Rads, an welchem die andere Reifendrucksensoranordnung angeordnet ist), welche von der von der anderen Reifendrucksensoranordnung empfangenen Querbeschleunigungsindikation repräsentiert wird, entsprechen und/oder auf dieser basieren.

Die Referenzquerbeschleunigung kann für eine Radposition vordefiniert sein. Hierdurch kann eine Zuordnung zwischen Reifendrucksensoranordnung, von der eine Referenzquerbeschleunigungsindikation empfangen wird, und der Radposition, basierend auf der Querbeschleunigung und der Referenzquerbeschleunigung, vorgenommen werden.

Die Referenzquerbeschleunigung kann abhängig von einem Drehpunkt des Fahrzeugs sein. Für den Drehpunkt gilt die Offenbarung hinsichtlich des ersten Aspekts.

Die Referenzquerbeschleunigung kann empirisch bestimmt sein, beispielsweise, indem Querbeschleunigungen von Rädern an Radpositionen vermessen werden. Hierfür kann beispielsweise sowohl der Beschleunigungssensor der Reifendrucksensoranordnung als auch ein weiterer Beschleunigungssensor verwendet werden. Der weitere Beschleunigungssensor kann beispielsweise im Rahmen einer Vermessung am Reifen angebracht werden (beispielsweise an einem Prüfstand).

Die Referenzquerbeschleunigung kann modellbasiert bestimmt sein, beispielsweise basierend auf einer geometrischen, physikalischen und/oder numerischen Simulation.

Gemäß einem vierten Aspekt der Erfindung wird eine Vorrichtung vorgeschlagen, umfassend Mittel, die dazu eingerichtet sind, das Verfahren nach dem dritten Aspekt auszuführen und/oder zu steuern.

Die Vorrichtung kann beispielsweise (z.B. fest) im Fahrzeug verbaut sein. Beispielsweise umfasst die Vorrichtung ein Gehäuse, welches übrige Komponenten der Vorrichtung einhaust, insbesondere fluiddicht. Beispielsweise kann die Vorrichtung eine Telematikeinheit des Fahrzeugs oder eine Steuerungseinheit einer Transportkältemaschine sein. Die Vorrichtung kann an einer (z.B. einzigen) Stelle im Fahrzeug lokalisiert sein. Auch kann die Vorrichtung sich auf zumindest 2 oder mehr Positionen im Fahrzeug verteilen.

Beispielsweise kann die Vorrichtung dazu eingerichtet sein, an zwei voneinander beabstandeten Positionen im Fahrzeug das Kommunikationssignal zu empfangen.

Gemäß einem Ausführungsbeispiel des vierten Aspekts, umfasst die Vorrichtung
- zumindest einen Beschleunigungssensor, wobei der Beschleunigungssensor dazu eingerichtet ist, die zumindest eine Fahrzeugbeschleunigung, umfassend eine Querbeschleunigung, zu erfassen.

Der Beschleunigungssensor kann beispielsweise mit der Vorrichtung integriert sein. Der Beschleunigungssensor kann beispielsweise eine Beschleunigung in einer oder zwei (oder drei) Erfassungsachsen erfassen. Eine der zumindest einen Fahrzeugbeschleunigungen kann im Wesentlichen parallel zu zumindest einer Rotationsachse eines Rades des Fahrzeugs (und/oder einer Radachse des Fahrzeuges, an der Räder des Fahrzeugs gelagert sind) ausgerichtet sein. Hierdurch kann beispielsweise eine Querbeschleunigung erfasst werden. Auch kann zumindest eine Beschleunigung in einer weiteren Erfassungsachse erfasst werden. Beispielsweise in einer Erfassungsachse welche im Wesentlichen senkrecht zur Erfassungsachse ist, in der die Querbeschleunigung erfasst wird. Beispielsweise kann die Erfassungsachse im Wesentlichen in Längsrichtung und/oder Fahrtrichtung des Fahrzeugs ausgerichtet sein.

Gemäß einem Ausführungsbeispiel des vierten Aspekts, umfasst die Vorrichtung
- ein Kommunikationsmittel, wobei das Kommunikationsmittel für das Empfangen des Kommunikationssignals eingerichtet ist, und/oder
- ein Zuordnungsmittel, wobei das Zuordnungsmittel für das Zuordnen eingerichtet ist.

Das Kommunikationsmittel ist insbesondere ein drahtloses Kommunikationsmittel. Das Kommunikationsmittel kann beispielsweise zumindest eine Antenne umfassen, über welche das Kommunikationsmittel elektromagnetische Wellen empfangen kann. Das Kommunikationsmittel kann beispielsweise dazu eingerichtet sein, ein Signal (beispielsweise das Kommunikationssignal) zu empfangen. Hierfür kann das Kommunikationsmittel beispielsweise dauerhaft empfangsbereit sein, beispielsweise, solange die Vorrichtung mit Energie versorgt wird. Das Kommunikationsmittel kann beispielsweise auf einer Trägerfrequenz Signale empfangen. Beispielsweise kann die Trägerfrequenz im Bereich einiger hundert MHz liegen, beispielsweise zwischen 100 und 800 MHz, beispielsweise 433 MHz. Beispielsweise ist das Kommunikationsmittel dazu eingerichtet, gemäß einem drahtlosen Kommunikationsstandard Nachrichten zu empfangen. Beispielsweise kann dieser Kommunikationsstandard ein Bluetooth Standard sein (https://www.bluetooth.com), Zigbee, ein anderer Kommunikationsstandard und/oder Kombinationen hieraus. Alternativ oder zusätzlich kann das Kommunikationsmittel dazu eingerichtet sein, ein paketbasiertes Empfangen von Daten zu ermöglichen.

Das Kommunikationsmittel kann gemäß einem Ausführungsbeispiel eine isotrope Richtcharakteristik aufweisen und im Wesentlichen aus allen Empfangsrichtungen Signale in gleich guter Stärke und Qualität empfangen. Auch eine anisotrope Richtcharakteristik ist möglich. Alternativ oder zusätzlich kann das Kommunikationsmittel mehrere Antennen umfassen, wobei die Antennen beispielsweise voneinander verschiedene rezeptive Felder (beispielsweise Raumwinkel, in welchen Signal oberhalb einer vordefinierten Empfindlichkeit empfangen werden können) aufweisen.

Gemäß einem Ausführungsbeispiel des vierten Aspekts umfasst die Vorrichtung
- ein Vergleichsmittel, wobei das Vergleichsmittel für den Vergleich der empfangenen Querbeschleunigungsindikation und/oder der Querbeschleunigung mit zumindest einer Referenzquerbeschleunigung eingerichtet ist.

Gemäß einem Ausführungsbeispiel des vierten Aspekts umfasst die Vorrichtung
- ein Ableit- und/oder Bestimmungsmittel, wobei das ein Ableit- und/oder Bestimmungsmittel zum Ableiten und/oder Bestimmen einer Kurvenrichtung aus der empfangenen Kurvenrichtungsindikation, einer Drehgeschwindigkeit aus der empfangenen Drehgeschwindigkeitsindikation, und/oder einer Drehrichtung aus der empfangenen Drehrichtungsindikation eingerichtet ist.

Das Vergleichsmittel und/oder das Ableit- und/oder Bestimmungsmittel können beispielsweise (funktionale Einheiten in einem jeweiligen oder gemeinsamen) Rechenmittel sein. Rechenmittel können beispielsweise zumindest einen Prozessor, einen Speicher, einen Microcontroller, ein FPGA, einen ASIC und/oder Kombinationen hieraus umfassen. Beispielsweise kann ein Speicher der Rechenmittel Instruktionen umfassen, welche, wenn sie von den zumindest einen Rechenmittel ausgeführt werden, die Vorrichtung dazu veranlassen, die entsprechenden Schritte des Verfahrens gemäß dem dritten Aspekt auszuführen und/oder zu steuern. Eine funktionale Einheit kann beispielsweise eine Menge von Instruktionen sein, welche die Steuerung und/oder Ausführung der jeweiligen Schritte des Verfahrens bewirken. Alternativ oder zusätzlich kann eine funktionale Einheit einer Verschaltung eines programmierten FPGA, ein Teilbereich eines ASIC und/oder Kombinationen hieraus sein.

Die Offenbarung in Hinblick auf den ersten bis dritten Aspekt gilt gleichermaßen für den vierten Aspekt.

Gemäß einem fünften Aspekt der Erfindung wird ein System vorgeschlagen umfassend zumindest eine Reifendrucksensoranordnung nach dem zweiten Aspekt und eine Vorrichtung nach dem vierten Aspekt.

Das System kann insbesondere mehrere Reifendrucksensoranordnungen umfassen.

Die Vorrichtung kann hierbei dazu eingerichtet sein, Kommunikationssignale von der zumindest einen Reifendrucksensoranordnung oder den mehreren Reifendrucksensoranordnungen zu empfangen und zu der jeweiligen Reifendrucksensoranordnung eine Radposition des Fahrzeugs zuzuordnen.

Gemäß einem sechsten Aspekt der Erfindung wird ein Fahrzeug vorgeschlagen, insbesondere ein Nutzfahrzeug, umfassend ein System nach dem fünften Aspekt.

Das Fahrzeug kann insbesondere die Eigenschaften aufweisen, welche in Hinblick auf den ersten Aspekt offenbart sind.

Die Radachsen des Fahrzeugs können zumindest teilweise oder alle starr sein, also lenkunfähig.

Gemäß einem Ausführungsbeispiel des sechsten Aspekts
- ist das Fahrzeug ein Anhänger und/oder
- umfasst das Fahrzeug zumindest sechs Radpositionen.

Das Fahrzeug kann insbesondere ein Anhänger sein, insbesondere für die Verwendung als Nutzfahrzeug, wie in Hinblick auf den ersten Aspekt offenbart.

Beispielsweise kann das Fahrzeug zumindest sechs Radpositionen aufweisen, wobei auf der rechten und der linken Seite des Fahrzeugs jeweils drei Räder in Fahrtrichtung hintereinander angeordnet sind.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Es zeigen:
- Fig. 1: eine schematische Darstellung einer beispielhaften Ausführungsform eines Straßennutzfahrzeugs gemäß der Erfindung;
- Fig. 2: eine schematische Darstellung einer beispielhaften Ausführungsform eines Rads mit einer Reifendrucksensoranordnung gemäß der Erfindung;
- Fig. 3: eine schematische Darstellung einer beispielhaften Ausführungsform eines Straßennutzfahrzeugs gemäß der Erfindung;
- Fig. 4: eine schematische Darstellung einer beispielhaften Ausführungsform von verschiedenen Radpositionen gemäß der Erfindung;
- Fig. 5: eine schematische Darstellung einer beispielhaften Ausführungsform der Querbeschleunigung gemäß der Erfindung;
- Fig. 6: eine schematische Darstellung einer beispielhaften Ausführungsform einer Zuordnung gemäß der Erfindung;
- Fig. 7: eine schematische Darstellung einer beispielhaften Ausführungsform einer Reifendrucksensoranordnung gemäß dem ersten und zweiten Aspekt der Erfindung;
- Fig. 8: eine schematische Darstellung einer beispielhaften Ausführungsform Kurvenfahrt gemäß der Erfindung;
- Fig. 9: ein Fließdiagramm einer beispielhaften Ausführungsform des Verfahrens gemäß dem ersten und zweiten Aspekt der Erfindung;
- Fig. 10: ein Fließdiagramm einer beispielhaften Ausführungsform eines Verfahrens gemäß dem dritten und vierten Aspekt der Erfindung;
- Fig. 11: ein Blockdiagramm einer beispielhaften Ausführungsform gemäß dem ersten und zweiten Aspekt der Erfindung;
- Fig. 12: ein Blockdiagramm einer beispielhaften Ausführungsform gemäß dem dritten und vierten Aspekt der Erfindung;
- Fig. 13: beispielhafte Speichermedien.

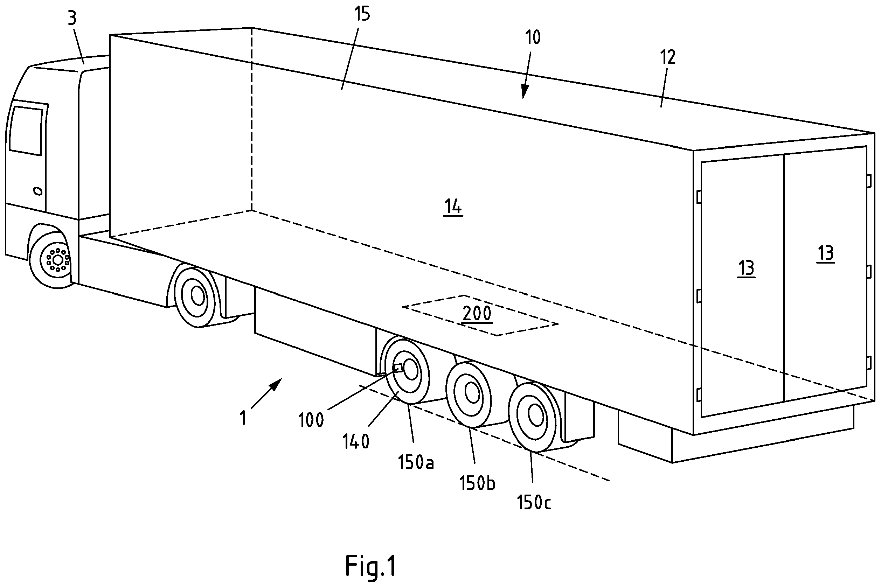

Fig. 1 ist eine schematische Darstellung einer beispielhaften Ausführungsform eines Fahrzeugs 1 gemäß der Erfindung, beispielsweise nach dem sechsen Aspekt der Erfindung.

Das gezeigte Fahrzeug 1 ist ein Nutzfahrzeug 1, genauer ein Anhänger 1, genauer noch ein Sattelauflieger 1 mit einem Kofferaufbau 10. Der Kofferaufbau 10 umfasst eine feste Stirnwand 11, ein festes Dach 12, eine durch Flügeltüren 13 gebildete Rückwand und feste Seitenwände 14. Der Kofferaufbau 10 umschließt dabei einen Laderaum 15 zur Aufnahme von zu transportierenden Gütern.

In dem Fahrzeug 1 ist eine Vorrichtung 200 gemäß dem dritten Aspekt der Erfindung angeordnet, deren ungefähre Position gestrichelt angedeutet ist. Hierbei kann es sich beispielsweise um eine Telematikeinheit 200 des Anhängers 1 handeln. An zumindest einem der Räder 140 an einer Reifenposition 150a oder auch an Rädern weiterer Radpositionen 150b und 150c des Anhängers 1 ist ein Reifendrucksensor 100, beispielsweise gemäß dem zweiten Aspekt der Erfindung, angeordnet. Dieser sendet Kommunikationssignale, welche von der Vorrichtung 200 empfangen werden.

Der Sattelauflieger 1 wird von einem Zugfahrzeug 3 gezogen.

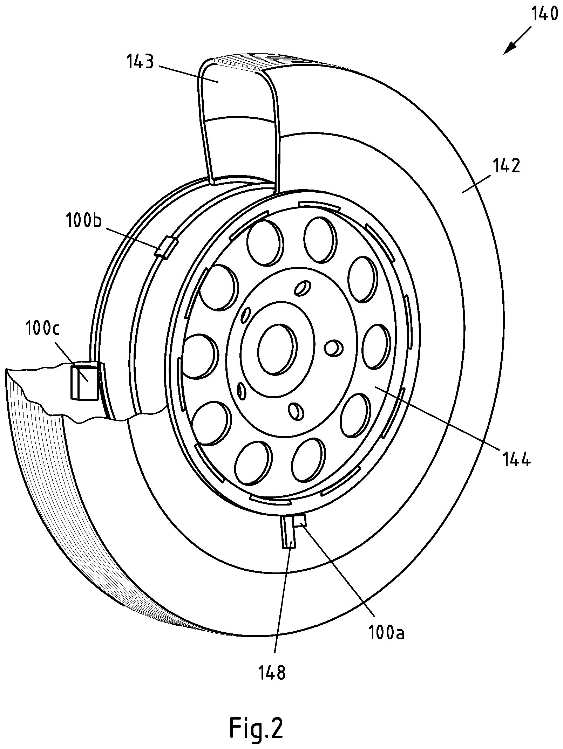

Fig. 2 zeigt ein Rad 140. Dieses umfasst einen Reifen 142. Der Reifen 142 kann beispielsweise Gummi und Metalleinlagen umfassen. Ferner umfasst das Rad 140 eine Felge 144. Die Felge 144 kann beispielsweise aus einem Metallwerkstoff gefertigt sein. Zwischen der Felge 144 und dem Reifen 142 befindet sich ein Innenraum 143 des Reifens 142 140. Der Innenraum 143 ist mit einem Gas, insbesondere Luft, gefüllt und steht unter Druck. Über ein Ventil 148 kann der Innenraum 143 mit dem Gas befüllt werden.

An dem Rad 140 ist eine Reifendrucksensoranordnung 100a, 100b, 100c angeordnet, beispielsweise nach dem zweiten Aspekt der Erfindung. Zu Illustrationszwecken sind drei solcher Reifendrucksensoranordnungen 100a, 100b, 100c gezeigt. Üblicherweise wird nur eine Reifendrucksensoranordnung 100a, 100b, 100c pro Rad verwendet. Gezeigt sind verschiedene Befestigungsmethoden für die Reifendrucksensoranordnung. So kann die Reifendrucksensoranordnung 100a in einem Bereich am Ventil 148 des Rads 140 angeordnet sein, entweder innerhalb des Innenraums 143 oder außen an der Felge 144. Die Reifendrucksensoranordnung 100b kann auch an der Felge 144 mit einem Spanngurt befestigt sein oder, siehe Reifendrucksensoranordnung 100c, mit dem Reifen verbunden, beispielsweise anvulkanisiert, sein.

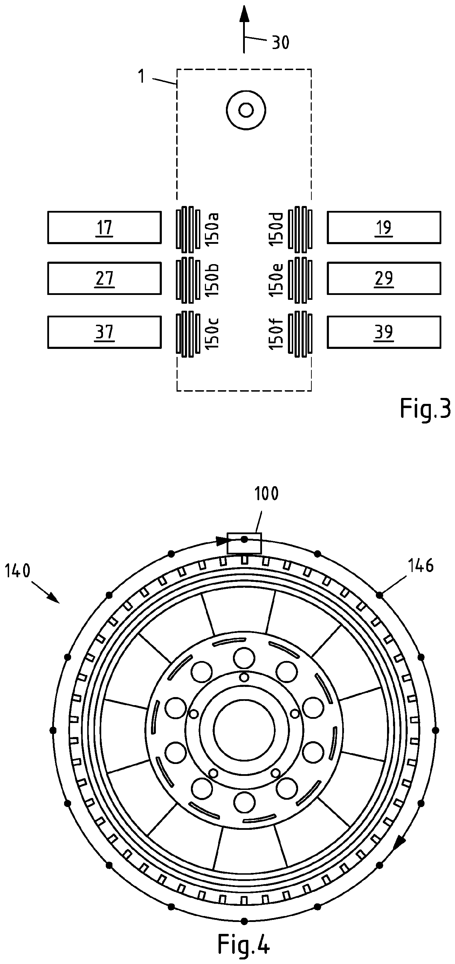

Fig. 3 zeigt eine schematische Ansicht eines Fahrzeugs 1 gemäß einem Ausführungsbeispiel, beispielsweise gemäß dem sechsten Aspekt der Erfindung. Das Fahrzeug 1 ist ein Anhänger 1. Dieser wird von einer nicht dargestellten Zugmaschine in einer Vorwärtsfahrtrichtung 30 gezogen. Zu sehen sind die sechs Radpositionen 150a bis 150f. Den Radpositionen 150a - 150f ist jeweils eine Zahl zugeordnet, wie in Fig. 3 gezeigt.

Fig. 4 zeigt ein Rad 140 mit einer Reifendrucksensoranordnung 100, beispielsweise nach dem zweiten Aspekt der Erfindung. Zu sehen sind ebenfalls mehrere Drehwinkelpositionen 146. Wenn sich das Rad 140 dreht, durchläuft dieses und damit auch die Reifendrucksensoranordnung 100 die gezeigten Drehwinkelpositionen 146. Gezeigt ist eine beschränkte Anzahl von diskreten Drehwinkelpositionen 146.

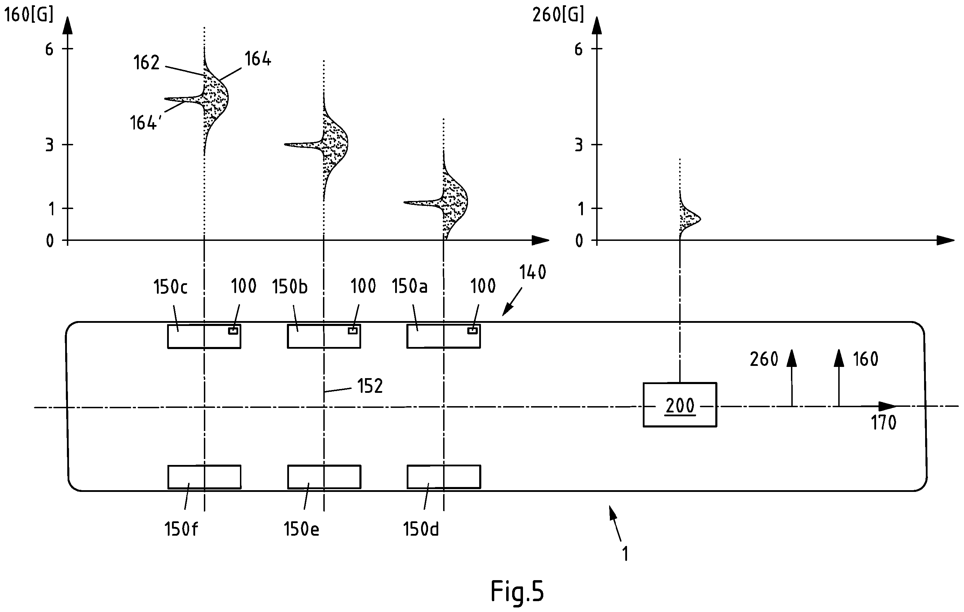

Fig. 5 zeigt ein Fahrzeug 1 in einer schematischen Ansicht von oben. Zu sehen sind 6 Radpositionen 150a-150f, an denen jeweilige Räder 140 mit einer Reifendrucksensoranordnung 100, beispielsweise nach dem zweiten Aspekt, angeordnet sind. Die Räder 140 drehen sich um jeweilige Rotationsachsen 152, welche insbesondere mit den Radachsen zusammenfallen, an denen die Räder 140 gelagert sind. Ferner umfasst das Fahrzeug 1 eine Vorrichtung 200, beispielsweise nach dem vierten Aspekt, welche beispielsweise dazu eingerichtet ist, Kommunikationssignale von den Reifendrucksensoranordnungen 100 zu empfangen. Auch kann die Vorrichtung 200 dazu eingerichtet sein, eine Fahrzeugbeschleunigung zu erfassen. Ein kleines Koordinatenkreuz zur Rechten der Zeichnung zeigt die Ausrichtung einer Querbeschleunigung 160 und einer Fahrzeugbeschleunigung 260 sowie die Ausrichtung einer weiteren Beschleunigung 170, die vorliegend in Fahrtrichtung ausgerichtet ist. Sowohl die Vorrichtung 200 als auch die Reifendrucksensoranordnungen 100 können eine jeweilige Querbeschleunigung 160, 260 erfassen.

Im oberen Bildbereich sind in einem vereinfachten Diagramm beispielhafte Verteilungen von Querbeschleunigungswerten der verschiedenen Radpositionen 150a-f gezeigt. Auf der Ordinate ist die Querbeschleunigung 160 aufgetragen, gemessen in G, bezogen auf die Erdbeschleunigung. Die Punkte 162 symbolisieren einzelne Messungen. Die gewölbte Linie zeigt eine Verteilung der einzelnen Messwerte der Querbeschleunigung 160. Beispielsweise können die verschiedenen Werte der Querbeschleunigung 160 durch Fahrten bei verschiedenen Kurvenradien und/oder verschiedenen Geschwindigkeiten des Fahrzeugs 1 zustande kommen. Die Querbeschleunigungswerte 160 sind positiv gezeigt, was beispielsweise dadurch begründet sein kann, dass absolute Querbeschleunigungswerte 160 betrachtet werden oder dass nur eine Kurvenrichtung (z.B. rechts) betrachtet wird. Ausgehend von den Messwerten kann beispielsweise eine zusammenfassende Metrik, beispielsweise ein Mittelwert, ein Median, ein Minimalwert und/oder ein Maximalwert oder ein Perzentil herangezogen werden, um die Radpositionen 150a-c und/oder 150d-f zu differenzieren, an denen die Reifendrucksensoranordnungen 100 angeordnet sind. Auch kann ein bestimmter Wertebereich von (Dreh-)Geschwindigkeiten, für die die Querbeschleunigung 160 erfasst wurde, herausgegriffen werden und so die Querbeschleunigung 160 noch schärfer trennen. Die Verteilung 164' illustriert beispielhaft den Effekt einer Beschränkung der Querbeschleunigungswerte 160 auf solche oberhalb eines Drehgeschwindigkeitsschwellwerts. Die Querbeschleunigungen 160 der Reifendrucksensoranordnungen 100 können untereinander verglichen werden. Auch können die Querbeschleunigungen 160 zumindest einer der Reifendrucksensoranordnungen 100 mit einem Referenzwert (beispielsweise für eine gegebene Geschwindigkeit des Fahrzeugs und/oder gegebene Drehgeschwindigkeit des Reifens) verglichen werden. Auch können die Querbeschleunigungen 160 mit einer Querbeschleunigung 260, welche als Teil einer Fahrzeugbeschleunigung von der Vorrichtung 200 erfasst wurde, verglichen werden. Diese als Teil der Fahrzeugbeschleunigung erfasste Querbeschleunigung 260 fällt vorliegend deutlich kleiner aus als die Querbeschleunigung 160 der Reifendrucksensoranordnungen 100. Das kann insbesondere dadurch begründet sein, dass ein Drehpunkt des Fahrzeugs 1 in Fahrtrichtung hinter den Radpositionen 150a-f liegt, in der Zeichnung als rechts der Radpositionen 150a-f.

Es können jeweils sowohl Momentanwerte der Querbeschleunigung 160 und/oder der Fahrzeugbeschleunigung 260 (untereinander, miteinander und/oder mit einem Referenzwert) verglichen werden, als auch zusammengefasste Werte (z.B. nach einer der obigen Metriken), welche über einen längeren Zeitraum von beispielsweise Tagen oder Wochen aufgenommen wurden.

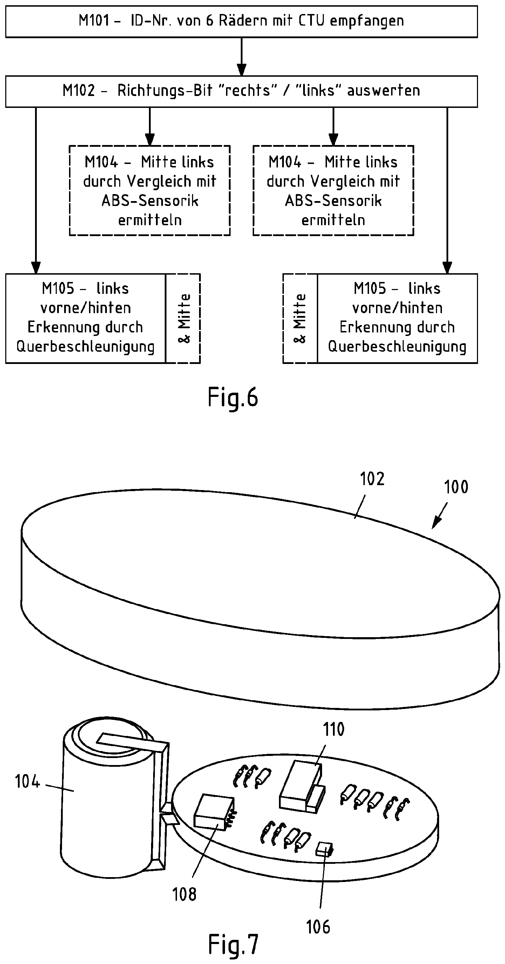

Fig. 6 zeigt eine beispielhafte Vorgehensweise der Zuordnung zwischen einer Reifendrucksensoranordnung 100 und einer jeweiligen Radposition 150. Von beispielhaften 6 Rädern wird mittels einer Telematikeinheit (CTU) ein Kommunikationssignal, umfassend eine Identifikation von der jeweiligen Reifendrucksensoranordnung 100, empfangen (Schritt M101). Vorzugsweise werden mehrere Kommunikationssignale von verschiedenen Reifendrucksensoranordnungen 100, 100' empfangen, sodass die Querbeschleunigungen verschiedener Räder verglichen werden können. Ein Kommunikationssignal kann weitere Informationen enthalten, insbesondere eine Drehrichtungsindikation (hier "Drehrichtungs-Bit") und/oder eine Drehgeschwindigkeitsindikation. Anhand dieses Drehrichtungs-Bits können die Reifendrucksensoranordnungen 100 in rechts und links aufgeteilt werden (M102, M103). Im Beispiel ist die jeweils mittlere Radposition (z.B. einer jeweiligen Fahrzeugseite) mit einer optionalen ABS-Sensorik versehen, anhand derer eine der Reifendrucksensoranordnungen 100 mit dieser mittleren Radposition verknüpft werden kann.

In Schritt M105 werden noch die verbleibenden je zwei Radpositionen 150 der beiden Fahrzeugseiten den jeweiligen Reifendrucksensoranordnungen 100 zugeordnet. Hierbei werden beispielsweise zwei Referenzquerbeschleunigungen, jeweils eine für die vordere und eine für die hintere Radposition 150, vorgehalten und mit einer empfangenen Querbeschleunigungsindikation verglichen. Auch können die Querbeschleunigungen zweier Reifendrucksensoranordnungen 100, 100' verglichen werden, insbesondere, wenn diese derselben Seite des Fahrzeugs zugeordnet wurden.

Fig. 7 zeigt eine Reifendrucksensoranordnung 100 gemäß einem Ausführungsbeispiel. Die Reifendrucksensoranordnung 100 umfasst ein Gehäuse 102, welches die Elektronik einhaust. Als Energiespeicher 104 ist eine Knopfzelle 104 vorgesehen. Auf der Platine sind eine Antenne 110 des Kommunikationsmittels, ein Drucksensor 106 sowie ein Beschleunigungssensor 108 angeordnet.

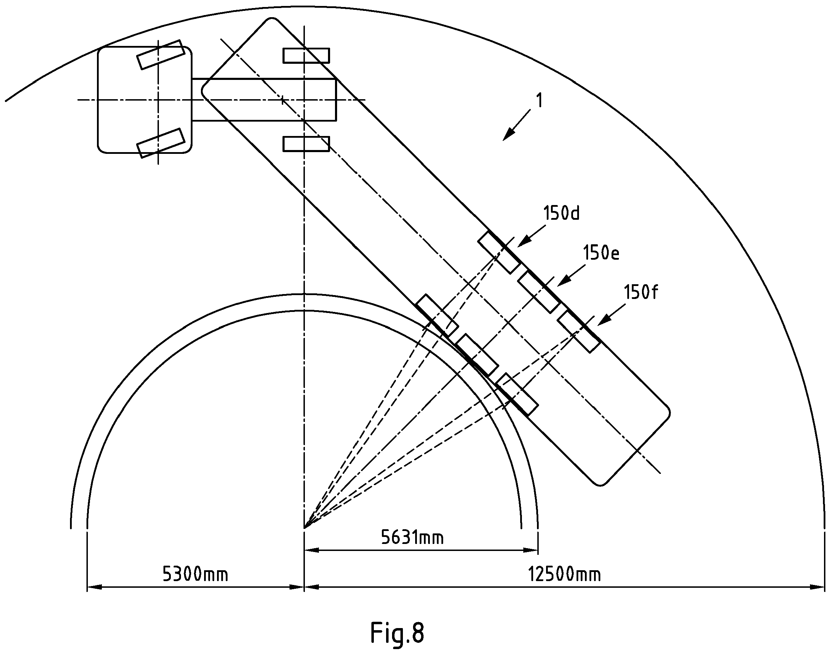

Fig. 8 illustriert eine Kurvenfahrt eines Anhängers 1 mit einer Zugmaschine. Insbesondere an den drei Hinterachsen, an welchen jeweils 2 Räder (eins links, eins rechts) angeordnet sind, ergeben sich bei einer Kurvenfahrt wie dargestellt vorwärts (Richtung Zugmaschine) verschiedene Querbeschleunigungen für die verschiedenen Radpositionen 150d, 150e, 150f. Beispielsweise kann, bezogen auf eine Seite des Fahrzeugs, das hintere Rad eine höhere Querbeschleunigung erfahren als das vordere Rad und/oder das mittlere Rad.

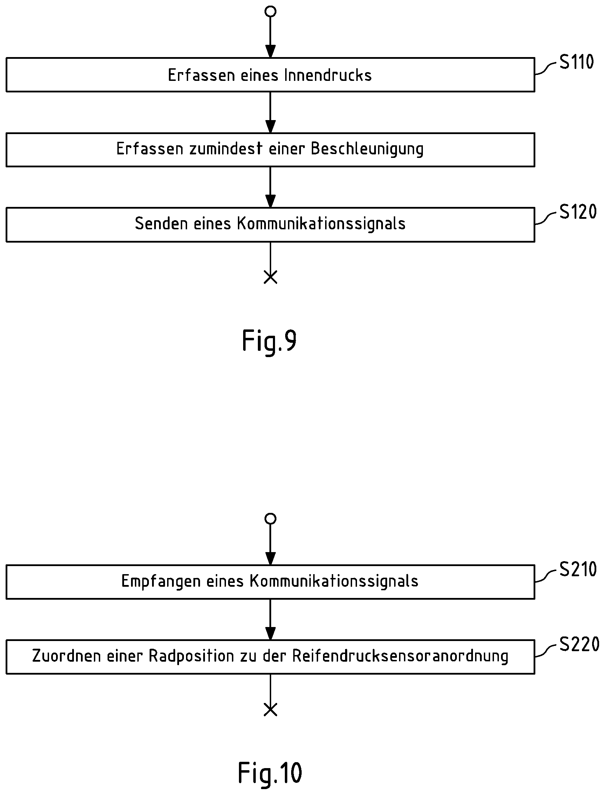

Fig. 9 ist ein Fließdiagram, welches das Verfahren gemäß dem ersten Aspekt illustriert, welches beispielsweise von einer Reifendrucksensoranordnung 100 gemäß dem zweiten Aspekt ausgeführt wird. Zunächst wird in Schritt S110 ein Innendruck des Reifens erfasst, insbesondere mit dem Drucksensor 106 einer Reifendrucksensoranordnung 100, beispielsweise nach dem zweiten Aspekt. Im folgenden Schritt S120 wird eine Beschleunigung erfasst, insbesondere umfassend eine Querbeschleunigung. Dann wird in Schritt S130 ein Kommunikationssignal gesendet, welches eine Reifendruckindikation und eine Querbeschleunigungsindikation umfasst.

Fig. 10 zeigt in einem weiteren Fließdiagram, das ein Verfahren gemäß dem dritten Aspekt illustriert, wie es beispielsweise von einer Vorrichtung 200 nach dem vierten Aspekt ausgeführt werden kann. In Schritt S210 wird ein Kommunikationssignal empfangen, wobei das Kommunikationssignal eine Querbeschleunigungsindikation umfasst. Diese empfangene Querbeschleunigungsindikation nutzt Schritt S220 dann zum Zuordnen einer Radposition 150 zu der Reifendrucksensoranordnung 100.

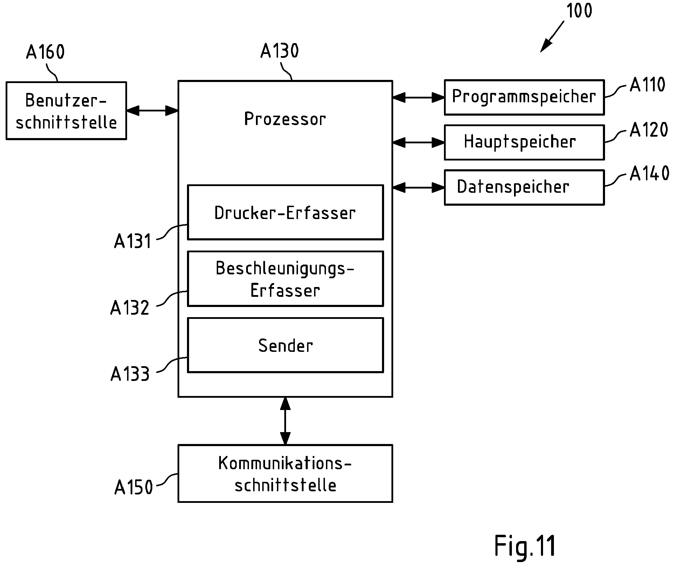

Fig. 11 zeigt ein Ausführungsbeispiel einer Reifendrucksensoranordnung 100 gemäß dem zweiten Aspekt. Die Reifendrucksensoranordnung 100 kann einen Programmspeicher A110, einen Hauptspeicher A120 und einen Datenspeicher A140 umfassen. Die Reifendrucksensoranordnung 100 kann ferner eine Benutzerschnittstelle A160 umfassen, die es beispielsweise einem Benutzer der Vorrichtung ermöglichen kann, mit ihr zu interagieren. Die Vorrichtung kann ferner eine Kommunikationsschnittstelle A150 umfassen, die beispielsweise so konfiguriert sein kann, dass sie mit mindestens einer anderen Vorrichtung, beispielsweise einer Vorrichtung gemäß dem vierten Aspekt, kommuniziert. Insbesondere kann die Kommunikationsschnittstelle A150 dazu eingerichtet sein, das Kommunikationssignal zu senden.

Die Reifendrucksensoranordnung 100 kann mindestens die Funktionseinheiten A131 bis A133 umfassen. Die Funktionseinheiten A131 bis A133 können hier und im Folgenden beispielsweise Softwaremodulen, Teilen eines Computerprogramms, Computerbefehlen, funktionalen elektronischen Schaltungen, mit der Reifendrucksensoranordnung 100 verbundenen funktionalen Komponenten und/oder Kombinationen hieraus entsprechen. Insbesondere kann der Druck-Erfasser A131 den Innendruck des Reifens erfassen und der Beschleunigungs-Erfasser A132 die zumindest eine Beschleunigung umfassend die Querbeschleunigung. Beschleunigungs-Erfasser A132 kann beispielsweise in Verbindung (z.B. Kommunikationsverbindung) mit einem Beschleunigungssensor stehen. Die Funktionseinheiten korrespondieren mit den jeweiligen Funktionen, wie sie im Flussdiagramm in Fig. 10 dargestellt sind. Der Sender A132 kann beispielweise mit der Kommunikationsschnittstelle A150 gemeinsam das Senden des Kommunikationssignals bewirken.

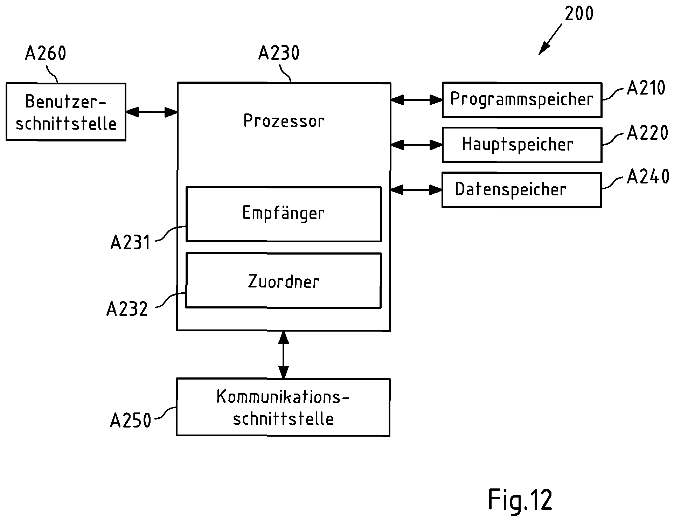

Fig. 12 zeigt eine Vorrichtung 200, insbesondere gemäß dem vierten Aspekt. Die Vorrichtung 200 kann Speicherkomponenten A210, A220, A240, eine Benutzerschnittstelle A260 und eine Kommunikationsschnittstelle A250 umfassen, wiederum ähnlich wie die für den zweiten beispielhaften Aspekt in Fig. 12 zur Reifendrucksensoranordnung 100. Die Vorrichtung 200 kann ferner die Funktionseinheiten A231 und A232 umfassen, die jeweils mit den im Flussdiagramm in Fig. 10 dargestellten Schritten korrespondieren.

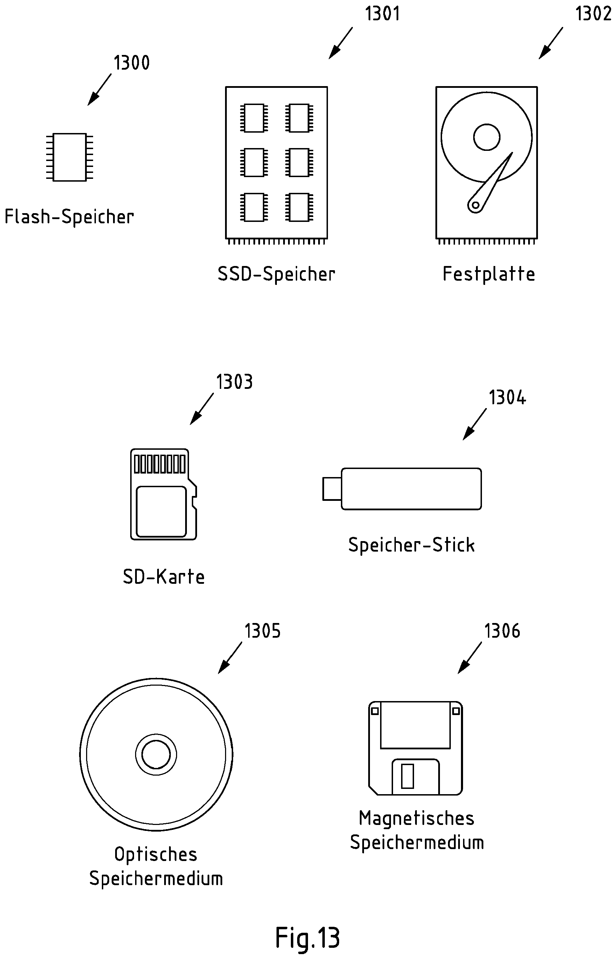

Fig. 13 ist eine schematische Darstellung von Beispielen von materiellen und nichtvergänglichen computerlesbaren Speichermedien gemäß der vorliegenden Erfindung, die beispielsweise zur Implementierung von Programm- und/oder Hauptspeicher A110, A120, A140, A210, A220, A240 der Reifendrucksensoranordnung 100 und/oder der Vorrichtung 200 der Fig. 10 und 12 verwendet werden können. Fig. 13 zeigt einen Flash-Speicher 1300, der z.B. auf eine Leiterplatte gelötet oder gebondet sein kann, ein Solid-State-Laufwerk 1301 mit einer Vielzahl von Speicherchips (z.B. Flash-Speicherchips), eine magnetische Festplatte 1302, eine Secure Digital (SD)-Karte 1303, einen Universal Serial Bus (USB)-Speicherstick 1304, ein optisches Speichermedium 1305 (wie z.B. eine CD-ROM oder DVD) und ein magnetisches Speichermedium 1306.

Ferner sollen die folgenden Ausführungsbeispiele als explizit offenbart gelten.

### Ausführungsbeispiel 1:

Verfahren zur Reifendrucküberwachung eines Fahrzeugs, insbesondere Nutzfahrzeugs, ausgeführt durch eine Reifendrucksensoranordnung, umfassend
- Erfassen eines Innendrucks eines Reifens eines Rads,
- Erfassen zumindest einer Beschleunigung, zumindest umfassend eine Querbeschleunigung, wobei die Querbeschleunigung im Wesentlichen parallel zu einer Rotationsachse des Rads wirkt,
- Senden eines Kommunikationssignals umfassend eine Reifendruckindikation und eine Querbeschleunigungsindikation, wobei die Reifendruckindikation zumindest den erfassten Innendruck des Reifens repräsentiert, und wobei die Querbeschleunigungsindikation zumindest die Querbeschleunigung repräsentiert.

### Ausführungsbeispiel 2:

Verfahren nach Ausführungsbeispiel 1,
- wobei mehrere Beschleunigungen in zumindest zwei oder drei verschiedenen Erfassungsachsen erfasst werden.

### Ausführungsbeispiel 3:

Verfahren nach Ausführungsbeispiel 1 oder 2, ferner umfassend
- Detektieren einer Kurvenfahrt des Fahrzeugs, insbesondere eines Beginns einer Kurvenfahrt und/oder eines Endes einer Kurvenfahrt und/oder einer Richtung der Kurvenfahrt.

### Ausführungsbeispiel 4:

Verfahren nach einem der Ausführungsbeispiele 1 bis 3,
- wobei das Detektieren auf zumindest einer der zumindest einen erfassten Beschleunigung basiert.

### Ausführungsbeispiel 5:

Verfahren nach einem der Ausführungsbeispiele 1 bis 4,
- wobei die Querbeschleunigungsindikation eine Querbeschleunigung während zumindest einer Kurvenfahrt repräsentiert.

### Ausführungsbeispiel 6:

Verfahren nach der Ausführungsbeispiel 5,
- wobei die Querbeschleunigung über zumindest zwei oder mehr Kurvenfahrten gemittelt ist, und/oder
- wobei die Querbeschleunigung über zumindest zwei oder mehr Kurvenfahrten gemittelt ist, wobei die Kurvenfahrten jeweils die gleiche Richtung aufweisen und/oder
- wobei die Querbeschleunigung einem Mittelwert, einem Median, einem Maximalwert und/oder einem Minimalwert über mehrere einzelne gemessene Querbeschleunigungswerte und/oder Kombinationen hieraus entspricht.

### Ausführungsbeispiel 7:

Verfahren nach einem der Ausführungsbeispiele 1 bis 6,
- wobei das Kommunikationssignal ferner eine Kurvenrichtungsindikation umfasst, wobei die Kurvenrichtungsindikation eine Richtung einer Kurvenfahrt repräsentiert, und/oder
- wobei das Kommunikationssignal ferner eine Kurvenanzahlindikation umfasst, wobei die Kurvenanzahlindikation eine Anzahl von durchfahrenen Kurvenfahrten repräsentiert, und/oder
- wobei das Kommunikationssignal ferner eine Drehgeschwindigkeitsindikation umfasst, wobei die Drehgeschwindigkeitsindikation eine Drehgeschwindigkeit des Rads repräsentiert, und/oder
- wobei das Kommunikationssignal ferner eine Drehgeschwindigkeitsindikation umfasst, wobei die Drehgeschwindigkeitsindikation eine Drehgeschwindigkeit des Rads während einer Kurvenfahrt repräsentiert, und/oder
- wobei das Kommunikationssignal ferner eine Drehrichtungsindikation umfasst, wobei die Drehrichtungsindikation eine Drehrichtung des Rads repräsentiert, und/oder
- wobei das Kommunikationssignal ferner eine Identifikation der Reifendrucksensoranordnung umfasst und/oder
- wobei das Kommunikationssignal ferner eine Zeitindikation umfasst, wobei die Zeitindikation der Querbeschleunigungsindikation zugeordnet ist und/oder wobei die Zeitindikation eine Zeitdauer oder einen Zeitpunkt repräsentiert.

### Ausführungsbeispiel 8:

Verfahren nach einem der Ausführungsbeispiele 1 bis 7,
- wobei das Erfassen der Querbeschleunigungsindikation abhängig ist von einer Drehgeschwindigkeitsindikation des Rads und/oder
- wobei das Erfassen der Querbeschleunigungsindikation abhängig ist von einer Drehrichtungsindikation des Rads und/oder
- wobei das Erfassen der Querbeschleunigungsindikation abhängig ist von einer Kurvenfahrt, insbesondere von dem Detektieren eines Beginns einer Kurvenfahrt und/oder eines Endes einer Kurvenfahrt und/oder einer Richtung der Kurvenfahrt.

### Ausführungsbeispiel 9:

Verfahren nach einem der Ausführungsbeispiele 1 bis 8,
- Bestimmen und/oder Ableiten, aus der zumindest einen erfassten Beschleunigung, einer Drehwinkelindikation, einer Drehrichtungsindikation und/oder einer Drehgeschwindigkeitsindikation.

### Ausführungsbeispiel 10:

Verfahren nach einem der Ausführungsbeispiele 1 bis 9,
- wobei das Senden abhängig ist von einer Kurvenfahrt, insbesondere von dem Detektieren eines Beginns einer Kurvenfahrt und/oder eines Endes einer Kurvenfahrt und/oder einer Richtung der Kurvenfahrt.

### Ausführungsbeispiel 11:

Reifendrucksensoranordnung für Fahrzeuge, insbesondere Nutzfahrzeuge, umfassend einen Drucksensor, einen Beschleunigungssensor und Mittel, die dazu eingerichtet sind, das Verfahren nach einem der Ansprüche 1 bis 10 auszuführen und/oder zu steuern.

### Ausführungsbeispiel 12:

Reifendrucksensoranordnung nach Ausführungsbeispiel 11,
- wobei der Drucksensor für das Erfassen des Innendrucks des Reifens eingerichtet ist, und/oder
- umfassend ein Kommunikationsmittel, wobei das Kommunikationsmittel für das Senden des Kommunikationssignals eingerichtet ist und/oder
- wobei der Beschleunigungssensor dazu eingerichtet ist, die zumindest eine Beschleunigung umfassend die Querbeschleunigung zu erfassen.

### Ausführungsbeispiel 13:

Reifendrucksensoranordnung nach Ausführungsbeispiel 11 oder 12, ferner umfassend
- ein Ableitungs- und/oder Bestimmungsmittel, wobei das Ableitungs- und/oder Bestimmungsmittel für die Ableitung einer Kurvenfahrt, insbesondere eines Beginns einer Kurvenfahrt und/oder eines Endes einer Kurvenfahrt und/oder einer Richtung einer Kurvenfahrt, einer Anzahl von Kurvenfahrten, einer Drehwinkelposition, insbesondere einer Enddrehwinkelposition und/oder einer Anfangsdrehwinkelposition, einer Drehrichtung und/oder einer Drehgeschwindigkeit eingerichtet ist.

### Ausführungsbeispiel 14:

Verfahren zur Reifendrucküberwachung eines Fahrzeugs, insbesondere Nutzfahrzeugs, ausgeführt durch eine Vorrichtung, umfassend
- Empfangen eines Kommunikationssignals jeweils umfassend eine jeweilige Reifendruckindikation eines Reifens eines Rads und eine jeweilige Querbeschleunigungsindikation eines Rads, von einer Reifendrucksensoranordnung, und
- Zuordnen einer Radposition zu der Reifendrucksensoranordnung, zumindest basierend auf der Querbeschleunigungsindikation.

### Ausführungsbeispiel 15:

Verfahren nach Ausführungsbeispiel 14,
- wobei das Kommunikationssignal ferner eine Kurvenrichtungsindikation, eine Drehgeschwindigkeitsindikation, eine Drehrichtungsindikation, eine Identifikation der Reifendrucksensoranordnung und/oder eine Zeitindikation umfasst.

### Ausführungsbeispiel 16:

Verfahren nach Ausführungsbeispiel 14 oder 15, ferner umfassend
- Erfassen zumindest einer Fahrzeugbeschleunigung, umfassend eine Querbeschleunigung.

### Ausführungsbeispiel 17:

Verfahren nach einem der Ausführungsbeispiele 14 bis 16,
- wobei das Zuordnen zumindest teilweise auf der empfangenen Querbeschleunigungsindikation einerseits und zumindest einer Referenzquerbeschleunigung für zumindest eine Radposition andererseits basiert und/oder
- wobei das Zuordnen zumindest teilweise auf der empfangenen Querbeschleunigungsindikation einerseits und zumindest einer der zumindest einen Fahrzeugbeschleunigung andererseits basiert.

### Ausführungsbeispiel 18:

Verfahren nach einem Ausführungsbeispiele 14 bis 17,
- ferner umfassend Empfangen eines weiteren Kommunikationssignals umfassend eine weitere Reifendruckindikation eines weiteren Reifens eines weiteren Rads und eine weitere Querbeschleunigungsindikation des weiteren Rads von einer weiteren Reifendrucksensoranordnung, und
- wobei das Zuordnen ferner auf der weiteren Querbeschleunigungsindikation basiert.

### Ausführungsbeispiel 19:

Verfahren nach einem der Ausführungsbeispiele 14 bis 18, ferner umfassend
- Ableiten und/oder Bestimmen einer Kurvenrichtung aus der empfangenen Kurvenrichtungsindikation, einer Drehgeschwindigkeit aus der empfangenen Drehgeschwindigkeitsindikation, und/oder einer Drehrichtung aus der empfangenen Drehrichtungsindikation.

### Ausführungsbeispiel 20:

Verfahren nach einem der Ausführungsbeispiele 14 bis 19,
- wobei das Zuordnen auf der empfangenen Kurvenrichtungsindikation und/oder der Kurvenrichtung, der empfangenen Drehgeschwindigkeitsindikation und/oder der Drehgeschwindigkeit, der empfangenen Drehrichtungsindikation und/oder der Drehrichtung, der empfangenen Zeitindikation und/oder der zumindest einen erfassten Fahrzeugbeschleunigung basiert.

### Ausführungsbeispiel 21:

Verfahren nach einem der Ausführungsbeispiele 14 bis 20, wobei die Referenzquerbeschleunigung
- für eine Radposition vordefiniert ist und/oder
- empirisch bestimmt ist, insbesondere zumindest teilweise basierend auf der zumindest einen erfassten Beschleunigung und/oder auf einem Drehwinkelmesser, und/oder
- modellbasiert, insbesondere basierend auf einer Simulation, bestimmt ist.

### Ausführungsbeispiel 22:

Vorrichtung, umfassend Mittel, die dazu eingerichtet sind, das Verfahren nach einem der Ausführungsbeispiel 14 bis 21 auszuführen und/oder zu steuern.

### Ausführungsbeispiel 23:

Vorrichtung nach Ausführungsbeispiel 22, ferner umfassend
- zumindest einen Beschleunigungssensor, wobei der Beschleunigungssensor dazu eingerichtet ist, die zumindest eine Fahrzeugbeschleunigung umfassend eine Querbeschleunigung zu erfassen.

### Ausführungsbeispiel 24:

Vorrichtung nach Ausführungsbeispiel 22 oder 21, umfassend
- ein Kommunikationsmittel, wobei das Kommunikationsmittel für das Empfangen des Kommunikationssignals eingerichtet ist, und/oder
- ein Zuordnungsmittel, wobei das Zuordnungsmittel für das Zuordnen eingerichtet ist.

### Ausführungsbeispiel 25:

Vorrichtung nach einem der Ausführungsbeispiele 22 bis 24, ferner umfassend
- ein Vergleichsmittel, wobei das Vergleichsmittel für den Vergleich der empfangenen Querbeschleunigungsindikation und/oder der Querbeschleunigung mit zumindest einer Referenzquerbeschleunigung und/oder der zumindest einen Fahrzeugbeschleunigung eingerichtet ist.

### Ausführungsbeispiel 26:

Vorrichtung nach einem der Ausführungsbeispiele 22 bis 25, ferner umfassend
- ein Ableit- und/oder Bestimmungsmittel, wobei das ein Ableit- und/oder Bestimmungsmittel zum Ableiten und/oder Bestimmen einer Kurvenrichtung aus der empfangenen Kurvenrichtungsindikation, einer Drehgeschwindigkeit aus der empfangenen Drehgeschwindigkeitsindikation, und/oder einer Drehrichtung aus der empfangenen Drehrichtungsindikation eingerichtet ist.

### Ausführungsbeispiel 27:

System umfassend zumindest eine Reifendrucksensoranordnung nach einem der Ausführungsbeispiele 12 bis 13 und eine Vorrichtung nach einem der Ausführungsbeispiele 22 bis 26.

### Ausführungsbeispiel 28:

Fahrzeug, insbesondere Nutzfahrzeug, umfassend ein System gemäß Ausführungsbeispiel 27.

### Ausführungsbeispiel 29:

Fahrzeug nach Ausführungsbeispiel 28,
- wobei das Fahrzeug ein Anhänger ist und/oder
- wobei das Fahrzeug zumindest sechs Radpositionen umfasst.

### Ausführungsbeispiel 30:

Eine Vorrichtung, z.B. die Reifendrucksensoranordnung nach dem zweiten Aspekt, mit mindestens einem Prozessor; und mindestens einem Speicher, der Anweisungen enthält, die, wenn sie von dem mindestens einen Prozessor ausgeführt werden, die Vorrichtung veranlassen, zumindest das Verfahren gemäß einem der Ausführungsbeispiele 1 bis 10 durchzuführen und/oder zu steuern.

### Ausführungsbeispiel 31:

Ein Computerprogramm, wobei das Computerprogramm, wenn es von einem Prozessor ausgeführt wird, eine Vorrichtung, z.B. die Vorrichtung gemäß dem zweiten Aspekt, veranlasst, die Aktionen und/oder Schritte des Verfahrens gemäß einem der Ausführungsbeispiele 1 bis 10 durchzuführen und/oder zu steuern.

### Ausführungsbeispiel 32:

Eine Vorrichtung, z.B. die Vorrichtung nach dem vierten Aspekt, mit mindestens einem Prozessor; und mindestens einem Speicher, der Anweisungen enthält, die, wenn sie von dem mindestens einen Prozessor ausgeführt werden, die Vorrichtung veranlassen, zumindest das Verfahren gemäß einem der Ausführungsbeispiele 14 bis 21 durchzuführen und/oder zu steuern.

### Ausführungsbeispiel 33:

Ein Computerprogramm, wobei das Computerprogramm, wenn es von einem Prozessor ausgeführt wird, eine Vorrichtung, z.B. die Vorrichtung gemäß dem vierten Aspekt, veranlasst, die Aktionen und/oder Schritte des Verfahrens gemäß einem der Ausführungsbeispiele 14 bis 21 durchzuführen und/oder zu steuern.

### Ausführungsbeispiel 34:

Ein Computerprogrammprodukt, das ein Computerprogramm gemäß Ausführungsbeispiel 31 umfasst.

### Ausführungsbeispiel 35:

Ein Computerprogrammprodukt, das ein Computerprogramm gemäß Ausführungsbeispiel 33 umfasst.

### Ausführungsbeispiel 36:

Ein System, umfassend:
mindestens eine erste Vorrichtung gemäß Ausführungsform 11 bis 13 oder 30 und mindestens eine zweite Vorrichtung gemäß Ausführungsform 14 bis 21 oder 32.

### Ausführungsbeispiel 37:

Fahrzeug, insbesondere Nutzfahrzeug, umfassend ein System gemäß Ausführungsbeispiel 36.

### Ausführungsbeispiel 38:

Fahrzeug nach Ausführungsbeispiel 37,
- wobei das Fahrzeug ein Anhänger ist und/oder
- wobei das Fahrzeug zumindest sechs Radpositionen umfasst.

In der vorliegenden Offenbarung ist jede in den beschriebenen Ausführungsformen dargestellte Verbindung so zu verstehen, dass die beteiligten Komponenten funktionell gekoppelt sind. Daher können die Verbindungen direkt oder indirekt sein, mit einer beliebigen Anzahl oder Kombination von dazwischenliegenden Elementen, und es kann lediglich eine funktionelle Beziehung zwischen den Komponenten bestehen.

Darüber hinaus können alle hierin beschriebenen oder dargestellten Verfahren, Prozesse und Aktionen unter Verwendung von ausführbaren Anweisungen in einem Mehrzweck- oder Spezialprozessor implementiert und auf einem computerlesbaren Speichermedium (z. B. Festplatte, Speicher oder dergleichen) gespeichert werden, um von einem solchen Prozessor ausgeführt zu werden. Verweise auf ein "computerlesbares Speichermedium" sollten so verstanden werden, dass sie auch spezialisierte Schaltungen wie FPGAs, ASICs, Signalverarbeitungsgeräte und andere Geräte umfassen.

Der Ausdruck "A und/oder B" umfasst eines der folgenden drei Szenarien: (i) A, (ii) B, (iii) A und B. Der Ausdruck "A und/oder B" hat die gleiche Bedeutung wie der Ausdruck "A oder B", und der Ausdruck "mindestens eines von A oder B" kann hier verwendet werden. Außerdem ist der Artikel "ein" nicht als "ein" (einziges) zu verstehen, d. h. die Verwendung des Ausdrucks "ein Element" schließt nicht aus, dass auch weitere Elemente vorhanden sind. Der Begriff "umfassend" ist in einem offenen Sinne zu verstehen, d.h. dass ein Gegenstand, der "ein Element A" umfasst, neben dem Element A auch weitere Elemente umfassen kann.

Es versteht sich, dass alle vorgestellten Ausführungsbeispiele (z.B. nur) beispielhaft sind, und dass jedes Merkmal, das für ein bestimmtes Ausführungsbeispiel vorgestellt wird, mit jedem beliebigen Aspekt allein oder in Kombination mit einem beliebigen Merkmal, das für dasselbe oder ein anderes bestimmtes Ausführungsbeispiel vorgestellt wird, und/oder in Kombination mit einem beliebigen anderen, nicht erwähnten Merkmal verwendet werden kann. Insbesondere sind die in dieser Beschreibung dargestellten Ausführungsbeispiele so zu verstehen, dass sie auch in allen möglichen Kombinationen miteinander offenbart werden, soweit dies technisch sinnvoll ist und die Ausführungsbeispiele keine Alternativen zueinander darstellen. Es versteht sich ferner, dass jedes Merkmal, das für ein Ausführungsbeispiel in einer bestimmten Kategorie (Verfahren/Gerät/Computerprogramm/System) dargestellt wird, auch in entsprechender Weise in einem Ausführungsbeispiel einer beliebigen anderen Kategorie verwendet werden kann. Es sollte auch verstanden werden, dass das Vorhandensein eines Merkmals in den vorgestellten Ausführungsbeispielen nicht unbedingt bedeutet, dass dieses Merkmal ein wesentliches Merkmal darstellt und nicht weggelassen oder ersetzt werden kann.

Die Angabe, dass ein Merkmal mindestens eines der nachfolgend aufgezählten Merkmale umfasst, ist nicht zwingend in der Weise, dass das Merkmal alle nachfolgend aufgezählten Merkmale oder mindestens ein Merkmal aus der Vielzahl der nachfolgend aufgezählten Merkmale umfasst. Auch eine Auswahl der aufgezählten Merkmale in beliebiger Kombination oder eine Auswahl von (z.B. nur) einem der aufgezählten Merkmale ist möglich. Auch die spezifische Kombination aller nachfolgend aufgezählten Merkmale kann in Betracht gezogen werden. Auch eine Vielzahl von (z.B. nur) einem der aufgezählten Merkmale kann möglich sein.

Die oben dargestellte Abfolge aller Verfahrensschritte ist nicht zwingend, auch alternative Abfolgen sind denkbar. Dennoch ist die in den Figuren beispielhaft dargestellte konkrete Abfolge von Verfahrensschritten als eine mögliche Abfolge von Verfahrensschritten für die jeweilige Ausführungsform, die durch die jeweilige Figur beschrieben wird, anzusehen.

Der Gegenstand ist oben anhand von Ausführungsbeispielen beschrieben worden. Es wird darauf hingewiesen, dass es alternative Wege und Variationen gibt, die für den Fachmann naheliegend sind und umgesetzt werden können, ohne vom Anwendungsbereich der beigefügten Ansprüche abzuweichen.

## Patentansprüche

1. Verfahren zur Reifendrucküberwachung eines Fahrzeugs, insbesondere Nutzfahrzeugs, ausgeführt durch eine Reifendrucksensoranordnung, umfassend
- Erfassen eines Innendrucks eines Reifens eines Rads,
- Erfassen zumindest einer Beschleunigung zumindest umfassend eine Querbeschleunigung, wobei die Querbeschleunigung im Wesentlichen parallel zu einer Rotationsachse des Rads wirkt,
- Senden eines Kommunikationssignals umfassend eine Reifendruckindikation und eine Querbeschleunigungsindikation, wobei die Reifendruckindikation zumindest den erfassten Innendruck des Reifens repräsentiert, und wobei die Querbeschleunigungsindikation zumindest die Querbeschleunigung repräsentiert.

2. Verfahren nach Anspruch 1,
- wobei mehrere Beschleunigungen in zumindest zwei oder drei verschiedenen Erfassungsachsen erfasst werden.

3. Verfahren nach Anspruch 1 oder 2,
- wobei die Querbeschleunigungsindikation eine Querbeschleunigung während zumindest einer Kurvenfahrt repräsentiert, und/oder
- wobei die Querbeschleunigung über zumindest zwei oder mehr Kurvenfahrten gemittelt ist, und/oder
- wobei die Querbeschleunigung über zumindest zwei oder mehr Kurvenfahrten gemittelt ist, wobei die Kurvenfahrten jeweils die gleiche Richtung aufweisen und/oder
- wobei die Querbeschleunigung einem Mittelwert, einem Median, einem Maximalwert und/oder einem Minimalwert über mehrere einzelne gemessene Querbeschleunigungswerte und/oder Kombinationen hieraus entspricht und/oder
- wobei das Senden abhängig ist von einer Kurvenfahrt, insbesondere von dem Detektieren eines Beginns einer Kurvenfahrt und/oder eines Endes einer Kurvenfahrt und/oder einer Richtung der Kurvenfahrt.

4. Verfahren nach einem der Ansprüche 1 bis 3,
- wobei das Erfassen der Querbeschleunigungsindikation abhängig ist von einer Drehgeschwindigkeitsindikation des Rads und/oder
- wobei das Erfassen der Querbeschleunigungsindikation abhängig ist von einer Drehrichtungsindikation des Rads und/oder
- wobei das Erfassen der Querbeschleunigungsindikation abhängig ist von einer Kurvenfahrt, insbesondere von dem Detektieren eines Beginns einer Kurvenfahrt und/oder eines Endes einer Kurvenfahrt und/oder einer Richtung der Kurvenfahrt.

5. Verfahren nach einem der Ansprüche 1 bis 4,
- Bestimmen und/oder Ableiten, aus der zumindest einen erfassten Beschleunigung, einer Drehwinkelindikation, einer Drehrichtungsindikation und/oder einer Drehgeschwindigkeitsindikation.

6. Reifendrucksensoranordnung für Fahrzeuge, insbesondere Nutzfahrzeuge, umfassend einen Drucksensor, einen Beschleunigungssensor und Mittel, die dazu eingerichtet sind, das Verfahren nach einem der Ansprüche 1 bis 5 auszuführen und/oder zu steuern.

7. Verfahren zur Reifendrucküberwachung eines Fahrzeugs, insbesondere Nutzfahrzeugs, ausgeführt durch eine Vorrichtung, umfassend
- Empfangen eines Kommunikationssignals jeweils umfassend eine jeweilige Reifendruckindikation eines Reifens eines Rads und eine jeweilige Querbeschleunigungsindikation eines Rads von einer Reifendrucksensoranordnung, und
- Zuordnen einer Radposition zu der Reifendrucksensoranordnung zumindest basierend auf der Querbeschleunigungsindikation.

8. Verfahren nach Anspruch 7,
- wobei das Kommunikationssignal ferner eine Kurvenrichtungsindikation, eine Drehgeschwindigkeitsindikation, eine Drehrichtungsindikation, eine Identifikation der Reifendrucksensoranordnung und/oder eine Zeitindikation umfasst.

9. Verfahren nach Anspruch 7 oder 8, ferner umfassend
- Erfassen zumindest einer Fahrzeugbeschleunigung umfassend eine Querbeschleunigung.

10. Verfahren nach einem der Ansprüche 7 bis 9,
- wobei das Zuordnen zumindest teilweise auf der empfangenen Querbeschleunigungsindikation einerseits und zumindest einer Referenzquerbeschleunigung für zumindest eine Radposition andererseits basiert und/oder
- wobei das Zuordnen zumindest teilweise auf der empfangenen Querbeschleunigungsindikation einerseits und zumindest einer Referenzquerbeschleunigung für zumindest eine Radposition andererseits basiert, wobei die Referenzquerbeschleunigung
- für eine Radposition vordefiniert ist und/oder
- empirisch bestimmt ist, insbesondere zumindest teilweise basierend auf der zumindest einen erfassten Beschleunigung und/oder auf einem Drehwinkelmesser, und/oder
- modellbasiert, insbesondere basierend auf einer Simulation, bestimmt ist und/oder
- wobei das Zuordnen zumindest teilweise auf der empfangenen Querbeschleunigungsindikation einerseits und zumindest einer der zumindest einen Fahrzeugbeschleunigung andererseits basiert.

11. Verfahren nach einem der Ansprüche 7 bis 10,
- ferner umfassend Empfangen eines weiteren Kommunikationssignals umfassend eine weitere Reifendruckindikation eines weiteren Reifens eines weiteren Rads und eine weitere Querbeschleunigungsindikation des weiteren Rads von einer weiteren Reifendrucksensoranordnung, und
- wobei das Zuordnen ferner auf der weiteren Querbeschleunigungsindikation basiert und/oder
- Ableiten und/oder Bestimmen einer Kurvenrichtung aus der empfangenen Kurvenrichtungsindikation, einer Drehgeschwindigkeit aus der empfangenen Drehgeschwindigkeitsindikation, und/oder einer Drehrichtung aus der empfangenen Drehrichtungsindikation.

12. Verfahren nach einem der Ansprüche 7 bis 11,
- wobei das Zuordnen auf der empfangenen Kurvenrichtungsindikation und/oder der Kurvenrichtung, der empfangenen Drehgeschwindigkeitsindikation und/oder der Drehgeschwindigkeit, der empfangenen Drehrichtungsindikation und/oder der Drehrichtung, der empfangenen Zeitindikation und/oder der zumindest einen erfassten Fahrzeugbeschleunigung basiert.

13. Vorrichtung, umfassend Mittel, die dazu eingerichtet sind, das Verfahren nach einem der Ansprüche 7 bis 12 auszuführen und/oder zu steuern.

14. System umfassend zumindest eine Reifendrucksensoranordnung nach Anspruch 6 und eine Vorrichtung nach Anspruch 13.

15. Fahrzeug, insbesondere Nutzfahrzeug, umfassend ein System gemäß Anspruch 14.
